# EUROPEAN PATENT APPLICATION

(11) **EP 4 652 900 A1**
(43) Date of publication of application: **26.11.2025**
(21) Application number: 24744978.8
(22) Date of filing: 18.01.2024
(51) Int. Cl.: A47D 13/02, A01K 1/02, B62B 9/12

(54) **CARRIER**

(30) Priority: 18.01.2023 CN 202310085067; 10.05.2023 CN 202310523976; 28.07.2023 CN 202310946030; 10.08.2023 CN 202311007889; 12.01.2024 CN 202410054922
(71) Applicant: Jani International Pte. Ltd., Singapore 569874 (SG)
(72) Inventor: GUO, Zhengwen, WanChai Hong Kong, 999077 (HK); CHEN, Yingzhong, WanChai Hong Kong, 999077 (HK); ZHONG, Zhiren, Wan Chai Hong Kong, 999077 (HK)
(74) Representative: Pfenning, Meinig & Partner mbB
(86) International application number: PCT/SG2024/050040
(87) International publication number: WO 2024/155240

(57) **Abstract**

Provided in the present disclosure is a carrier. The carrier comprises a body and a bottom support member. At least part of the body is detachably connected to the bottom support member by means of at least one first connection assembly, and forms a box body having an accommodating space together with the bottom support member. The body comprises a first support member and a second support member. At least part of the first support member is detachably connected to the second support member by means of at least one second connection assembly. Further provided in the present disclosure are a carrier provided with a clamping member, and a carrier provided with a support assembly.

## Description

### TECHNICAL FIELD

The present disclosure relates to the field of carriers, in particular to a carrier for transporting a pet mounted on a vehicle or on a moving device.

### BACKGROUND

In recent years, as users increasingly emphasize the safety of pets in moving vehicles, most users use carriers such as bassinets and carry cots to transport the pets during travel, which facilitates portability and transport, and provides designated positioning or seating areas for the pets within the vehicle. Typically, the main part of such a carrier (e.g., the basket or box body) is not foldable, which may lead to significant space occupation within the vehicle when the carrier is not in use, and even the carrier is too large to be stowed in a trunk of the vehicle, leading to that the user have to move the carrier frequently.

Also, users are increasingly concerned about the safety of the carrier for carrying the pet in the vehicle or on a mobile carrier, such as the stability of the carrier when secured to the vehicle (e.g., a vehicle seat) or a moving device (e.g., a stroller).

Furthermore, existing carriers (e.g., sleeping crates) usually lack side impact protection, so that the lateral impact force cannot be cushioned well in the event of an accidental collision of the vehicle (especially impacts on its side), increasing the risk of injury to the pet in the carrier. Therefore, there is an urgent need for a carrier having an impact resistant structure to further enhance the pet safety of pets during transportation.

### SUMMARY

The present disclosure provides a carrier including a body and a bottom support member. At least a part of the body is detachably connected to the bottom support member by means of at least one first connection assembly, and forms a box body having an accommodating space together with the bottom support member. The body includes a first support member and a second support member. At least a part of the first support member is detachably connected to the second support member by means of at least one second connection assembly.
when the at least a part of the body is separated from the bottom support member and the at least a part of the first support member is separated from the second support member, the first support member and/or the second support member are capable of being folded to change the box body from an unfolded state to a stowed state.

In an embodiment, the at least one first connection assembly includes a first connecting member and a second connecting member detachably connected to each other, the first connecting member is disposed on the body, and the second connecting member is disposed on the bottom support member.

In an embodiment, the at least one second connection assembly includes a third connecting member and a fourth connecting member detachably connected to each other, the third connecting member is disposed on the first support member, and the fourth connecting member is disposed on the second support member.

In an embodiment, the first support member and the second support member are detachably connected to each other.

After the first support member and the second support member are completely separated from each other, the first support member and/or the second support member are capable of being folded, respectively, to allow the box body to be in the stowed state.

In an embodiment, one part of the first support member is non-detachably connected to the second support member and the other part of the first support member is detachably connected to the second support member.

After the body and the bottom support member are separated from each other and the other part of the first support member is separated from the second support member, the first support member and the second support member are capable of being folded relative to each other to allow the box body to be in the stowed state.

In an embodiment, the first support member is a side support member and forms two side surfaces of the body. The second support member is an upper support member and forms a top surface and at least a part of the other two side surfaces of the body.

In an embodiment, the upper support member is formed by a first sheet-like member, a second sheet-like member and a third sheet-like member, and the second sheet-like member is connected between the first sheet-like member and the third sheet-like member. After the side support member is separated from the upper support member, the first sheet-like member, second sheet-like member and third sheet-like member are capable of being folded relative to each other.

In an embodiment, an end of each of the first sheet-like member and the third sheet-like member away from the second sheet-like member is fixedly connected to the bottom support member. After the side support member is separated from the upper support member, the upper support member is capable of being folded over the bottom support member by a plurality of folding parts on the first sheet-like member and the third sheet-like member.

In an embodiment, the side support member includes a first sub-support member and a second sub-support member. The first sub-support member and the second sub-support member are independent of each other, and each of the first sub-support member and the second sub-support member has a bottom edge extending substantially horizontally and a top edge in an arched shape. The bottom edges of the first sub-support member and the second sub-support member are detachably connected to corresponding edges of the bottom support member, and the top edges of the first sub-support member and the second sub-support member are detachably connected to two sides of the upper support member in the arched shape.

In an embodiment, the first sub-support member and the second sub-support member are connected to each other by a connecting component, and the first sub-support member, the connecting component, and the second sub-support member are all detachably connected to the bottom support member. After the side support member and the upper support member are completely separated from each other, the first sub-support member and the second sub-support member are capable of being folded relative to each other.

In an embodiment, the first sub-support member, the second sub-support member and the connecting component are integrally formed to form the side support member. The bottom edges of the first sub-support member and the second sub-support member are integrally connected to bottom edges of the connecting component in a peripheral direction, and the top edges of the first sub-support member and the second sub-support member are formed as arches and integrally connected by top edges of the connecting component, such that the side support member is detachably connected between the upper support member and the bottom support member.

In an embodiment, a part of the side support member is non-detachably connected to the upper support member, and the other part of the side support member is detachably connected to the upper support member. After the other part of the side support member is separated from the upper support member, the side support member and the upper support member are capable of being folded relative to each other.

In an embodiment, the upper support member includes a first sheet-like member, a second sheet-like member and a third sheet-like member. The first sheet-like member and the third sheet-like member respectively have a flexible structure. After the other part of the side support member is separated from the upper support member, the upper support member is capable of being folded by the flexible structures of the first sheet-like member and the third sheet-like member relative to the side support member and stowed in the side support member.

In an embodiment, the side support member includes a first sub-support member and a second sub-support member, each having a bottom edge extending substantially horizontally and a top edge in an arched shape. The first sub-support member and the second sub-support member are integrally formed with a connecting piece to form the side support member, such that the bottom edges of the first sub-support member and the second sub-support member form a bottom edge of the body together with a bottom edge of the connecting piece, and the bottom edge of the body is detachably connected to the bottom support member.

In an embodiment, a part of the first sub-support member and a part of the second sub-support member are non-detachably connected to the upper support member, respectively. The other part of the first sub-support member and the other part of the second sub-support member are detachably connected to the upper support member by the at least one second connection assembly, respectively. The connecting piece has a flexible structure such that the first sub-support member and the second sub-support member are capable of approaching each other to be folded after the other part of the first sub-support member and the other part of the second sub-support member are separated from the upper support member.

In an embodiment, the at least one second connection assembly includes a connecting member disposed at a top edge of the first sub-support member or the second sub-support member and extending along a part of the top edge, and a further connecting member disposed at a side edge of the upper support member and extending along a part of the side edge. The connecting member and the further connecting member are disposed in correspondence with each other and detachably connected to each other, such that the other part of the first sub-support member and the other part of the second sub-support member are detachably connected to two side edges of the upper support member, respectively.

In an embodiment, any sides of the body are provided with an impact resistant material.

In an embodiment, the impact resistant material is disposed on at least one side of the body near a vehicle door when the carrier is placed on a vehicle seat.

In an embodiment, the impact resistant material is configured as a filler material filled in a seat fabric wrapped around the body.

In an embodiment, the impact resistant material is configured as a separate component.

In an embodiment, one or more side surfaces of the body are respectively provided with a window, and the windows are provided with a closure member configured to close and/or shield the window.

In an embodiment, a part of the closure member is non-detachably connected to the body.

In an embodiment, at least one closure member has a first part and a second part connected to each other. At least a part of the first part is non-detachably connected to the body and covers one part of the window. The second part is detachably connected to the body and covers the other part of the window.

In an embodiment, the first part and the second part are made of different materials and/or have different thickness.

In an embodiment, the second part of the closure member is provided with an impact resistant material.

In an embodiment, the impact resistant material is configured as a filler material filled in the second part of the closure member.

In an embodiment, at least one closure member is provided with an impact resistant material. In an embodiment, the impact resistant material is integrally formed with the closure member.

In an embodiment, the impact resistant material is separately formed and fixedly connected to the closure member.

In an embodiment, the closure member is a flexible fabric and a retaining member is disposed on an upper part of the closure member to maintain the closure member opening.

In an embodiment, a carrying handle is disposed on a top surface of the body.

In an embodiment, an extending part extending downwardly is disposed at a bottom edge of the body, and is configured to insert into a corresponding insertion groove disposed in the bottom support member.

In an embodiment, the carrier further includes a bracket assembly, the bracket assembly is disposed at the bottom part of the bottom support member for securing the carrier to a wheeled moving device, or to a vehicle seat by a fixing base assembly.

In an embodiment, the bracket assembly is capable of being connected and secured to an engaging part of the fixing base assembly, or to a locking mechanism of a seat plate of the wheeled moving device.

In an embodiment, the bracket assembly includes an engaging member. The engaging member is configured as an annular structure member. The engaging member is spaced apart from the bottom part of the bottom support member and configured to be engaged with an engagement structure on the wheeled moving device or on the fixing base assembly, so as to secure the carrier.

In an embodiment, the bottom support member is provided with an engaging member for securing the box body of the carrier to a moving device.

In an embodiment, the bottom support member is provided with two third grooves extending respectively in a width direction of the bottom support member and the two third grooves are spaced apart by a predetermined distance in a length direction of the bottom support member. The bottom support member is provided with four engaging members, the four engaging members are symmetrically disposed in the two third grooves in both the width direction and the length direction.

In an embodiment, the carrier is provided with at least one strap guiding mechanism, which is disposed on at least one of a side part, a bottom part and a top part of the carrier and configured to guide a strap body of a fixing strap assembly to pass therethrough, so that the fixing strap assembly is bonded to the carrier at at least one position.

In an embodiment, the at least one strap guiding mechanism is disposed on the bottom support member and/or on a bracket assembly disposed on the bottom part of the bottom support member.

In an embodiment, the at least one strap guiding structure includes four first strap guiding mechanisms, and the four first strap guiding mechanisms are disposed symmetrically in pairs on the bottom part of the bottom support member or disposed symmetrically in pairs on the bracket assembly on the bottom part of the bottom support member.

In an embodiment, the bottom support member includes two second strap guiding mechanisms, and the two second strap guiding mechanisms are disposed between engaging members of the bottom support member and a bottom surface of the bottom support member, and are disposed at a centerline in a width direction of the body.

In an embodiment, the bottom support member is provided with at least one connecting part fitting with a fixing strap assembly to secure the carrier to a vehicle seat.

The present disclosure provides a carrier. The carrier includes a body and a bottom support member. The body is covered on the bottom support member and forms a box body having an accommodating space together with the bottom support member. An engaging member is disposed in the bottom support member and at least a part of the engaging member is exposed from a bottom part of the bottom support member for securing the box body of the carrier to a moving device.

In an embodiment, the bottom support member includes a base housing, a fixing bracket and a support plate. The base housing is connected to the support plate to form the appearance of the bottom support member. The fixing bracket is disposed between the base housing and the support plate. The fixing bracket includes the engaging member.

In an embodiment, at least a part of the engaging member is exposed outside the bottom support member through an engaging gap on the base housing to form an engaging part.

In an embodiment, two engaging members are symmetrically disposed and respectively extend along a length direction of the box body and the four engaging gaps are correspondingly formed on the base housing, so as to form four engaging parts on the bottom part of the bottom support member.

In an embodiment, the fixing bracket further includes fixing bases. The fixing bases are disposed at two ends of the engaging member to secure the engaging member between the base housing and the support plate.

In an embodiment, the body is detachably connected to the bottom support member.

In an embodiment, the body is an integrally formed structure and made of a rigid material to maintain a shape of the body.

In an embodiment, the bottom support member is provided with at least one strap guiding mechanism configured to guide a strap body of a fixing strap assembly to pass therethrough, so that the fixing strap assembly is bonded to the carrier at at least one position.

In an embodiment, the strap guiding mechanism includes a shell, the shell defines a channel, and the channel has a first port and a second port, through which the strap body passes.

In an embodiment, the channel further has a side introduction port, the side introduction port is located on the same side of the first port and the second port, and the side introduction port has a sloped wall.

In an embodiment, a first convex rib and a second convex rib are respectively provided on side walls opposite to each other in the channel, and the first convex rib and the second convex rib are alternately provided in a length direction of the strap body.

In an embodiment, the carrier further includes a cam disposed in the channel. The cam has a working position and a disabled position (i.e., failure position). In the working position, the cam presses the strap body against the shell. In the disabled position, the cam releases pressing on the strap body.

In an embodiment, a reinforcing member is disposed on a side wall of the channel. When the cam is in the working position, the strap body is adapted to be clamped between the reinforcing member and the cam.

In an embodiment, the strap guiding mechanism further includes an adjusting button, the adjusting button is connected to the cam to push the cam to rotate between the working position and the disabled position.

In an embodiment, the shell defines a mounting cavity adjacent to the channel, and the adjusting button is mounted in the mounting cavity. The shell defines an operation port for operating the adjusting button.

In an embodiment, the cam has a plurality of teeth for pressing against the strap body.

The present disclosure further provides a carrier. The carrier includes: a box body including a body and a bottom support member, the body being covered on the bottom support member and forming a box body having an accommodating space together with the bottom support member; and a bracket assembly configured to secure the carrier to a wheeled moving device, or to a vehicle seat by means of a fixing base assembly. The box body is mounted on the bracket assembly by the bottom support member. The bracket assembly includes an engaging member. The engaging member is spaced apart from the bottom part of the bottom support member and configured to be engaged with an engagement structure on the wheeled moving device or on the fixing base assembly, so as to secure the carrier.

In an embodiment, the engaging member is configured as an annular structure member. A center of the engaging member corresponds to a center of the box body in both a width direction of the box body and a length direction of the box body.

In an embodiment, the bracket assembly further includes a plurality of first connecting brackets symmetrically disposed on the engaging member to be connected to the bottom part of the box body and spaced apart from each other by a certain distance.

In an embodiment, the bracket assembly further includes a plurality of second connecting brackets disposed on two opposite sides of the engaging member along a longitudinal axis direction and connected to the bottom part of the box body.

In an embodiment, the bracket assembly may further include a structural reinforcement member, which is approximately located in a middle of the engaging member along the longitudinal axis direction. A central part of the structural reinforcement member has a curved shape toward the bottom part of the box body.

### BRIEF DESCRIPTION OF THE DRAWINGS

The accompanying drawings, which are included herein to provide a further understanding of the present disclosure and are incorporated herein to constitute a part of the present specification. The accompanying drawings illustrate embodiments of the present disclosure and are used in conjunction with the following description to illustrate the concepts of the present disclosure.
FIG. 1 shows a perspective view of a carrier according to a first embodiment of a first aspect of the present disclosure.
FIG. 2 shows a partially exploded perspective view of the carrier shown in FIG. 1, in which a box body of the carrier is separated from a bracket assembly thereof.
FIG. 3 shows a perspective view of a body of a box body of the carrier shown in FIG. 1.
FIG. 4 shows a perspective view of a side support member of the box body shown in FIG. 3.
FIG. 5 shows a perspective view of an upper support member of the box body shown in FIG. 3.
FIG. 6 shows a perspective view of a side support member of the carrier according to a second embodiment of the first aspect of the present disclosure.
FIG. 7 shows a perspective view of an upper support member fitting with the side support member shown in FIG. 6.
FIG. 8 shows a perspective view of a body of a carrier according to a third embodiment of the first aspect of the present disclosure.
FIG. 9 shows a perspective view of a bottom support member of the carrier shown in FIG. 8.
FIG. 10 shows a bottom perspective view of the carrier according to the first aspect of the present disclosure.
FIG. 11 shows a perspective view of a fixing base assembly fitting with the carrier shown in FIG. 10.
FIG. 12 shows a perspective view of the carrier being mounted to a vehicle by the fixing base assembly.
FIG. 13 shows a perspective view of a fixing strap assembly shown in FIG. 12.
FIG. 14 shows a perspective view of a wheeled moving device fitted with the carrier shown in FIG. 10.
FIG. 15 shows a perspective view of the carrier being mounted to the wheeled moving device.
FIG. 16 shows a perspective view of a carrier according to a first embodiment of a second aspect of the present disclosure.
FIG. 17 shows an exploded perspective view of a box body shown in FIG. 16.
FIG. 18 shows a perspective view of a body of the box body shown in FIG. 17.
FIGS. 19 and 20 show another perspective view of the box body shown in FIG. 16, in which at least a part of a second window covering is separated from the body.
FIGS. 21 and 22 respectively show schematic views illustrating a folding process of a body of the box body shown in FIG. 16.
FIGS. 23 and 24 respectively show schematic views illustrating a folding process of the body of the box body shown in FIG. 16.
FIGS. 25 and 26 respectively show perspective views of a carrier according to a second embodiment of the second aspect of the present disclosure from different angles.
FIG. 27 shows another perspective view of the box body shown in FIG. 25, with a window on a side of the box body being opened.
FIGS. 28 and 29 respectively show schematic views illustrating a folding process of the box body shown in FIG. 25.
FIG. 30 shows a perspective view of a carrier mounted on a vehicle seat according to the second aspect of the present disclosure.
FIGS. 31 and 32 respectively show a bottom view and a schematic view of a bottom support member according to an embodiment of the second aspect of the present disclosure.
FIGS. 33 and 34 respectively show exploded perspective views of a bottom support member shown in FIG. 32.
FIGS. 35 and 36 respectively show a bottom view and a schematic view of a bottom support member according to another embodiment of the second aspect of the present disclosure.
FIGS. 37A to 37C respectively show perspective views of a body of a carrier according to a third embodiment of the second aspect of the present disclosure.
FIGS. 37D to 37F respectively show perspective views of a body of a carrier according to a fourth embodiment of the second aspect of the present disclosure.
FIG. 38 shows a perspective view of a carrier according to a first embodiment of a third aspect of the present disclosure.
FIG. 39 shows a bottom view of the carrier in FIG. 38.
FIG. 40 shows a perspective view of the carrier in FIG. 38 secured to a vehicle seat.
FIG. 41 shows a perspective view of the fixing strap assembly in FIG. 40.
FIG. 42 shows a perspective view of a top shell of a strap guiding mechanism in FIG. 39 in one direction.
FIG. 43 shows a perspective view of the top shell in FIG. 42 in another direction.
FIG. 44 shows a bottom view of the carrier in FIG. 38, and shows the structure of a bottom shell of the strap guiding mechanism.
FIG. 45 shows a partially cross-sectional view of FIG. 39 along C4-C4.
FIG. 46 shows a partially cross-sectional view of FIG. 39 along C5-C5.
FIG. 47 shows a perspective view of a carrier secured to a vehicle seat according to a second embodiment of the third aspect of the present disclosure.
FIG. 48 shows a bottom view of the carrier in FIG. 47.
FIG. 49 shows an exploded view of the strap guiding mechanism in FIG. 48.
FIG. 50 shows a partially cross-sectional view of FIG. 48 along C6-C6.
FIG. 51 shows a partially cross-sectional view of FIG. 48 along C7-C7, in which the cam presses a webbing strap against the top shell.
FIG. 52 shows a partial cross-sectional view of FIG. 48 along C7-C7, in which the cam releases pressing on the webbing strap.

Description of reference numerals: carrier 1100
box body 1110
   body 1111, 1111B
      side support member 11111, 11111A, 11111B
         first sub-support member 11111a, 11111Aa
         second sub-support member 11111b, 11111Ab
         connecting piece 11111Ac
         bottom side edge 11111m
         top side edge 11111n
      upper support member 11112, 11112A, 11112B
         sheet-like member 11112a, 11112b, 11112c
         connecting structure 11112f
      extending part 11113B, 11114B
      window covering 11111d, 11112d
      retaining member 11112e
      carrying handle 11115
      first connecting member 11116
      second connecting member 11117
      third connecting member 11118a, 11118b
      fourth connecting member 11119a, 11119b
   bottom support member 1112, 1112B
      bottom part 1112Ba
      peripheral wall 1112Bb
      insertion groove 11121B
      connecting part 11122
bracket assembly 1120
   engaging member 1121
   first connecting bracket 1122
   second connecting bracket 1123
   structural reinforcement member 1124
fixing base assembly 1200
   engaging part 1210
   connecting device 1220
fixing strap assembly 1300
   first strap 1310
   second strap 1320
   connecting device 1330
   connecting device 1340
   adjuster 1350
wheeled moving device 1400
   frame 1410
      pivot point 1410a
      front support bar 1411
      rear support bar 1412
      upper support bar 1413
      support frame 1414
      first connecting component 1415
      second connecting component 1416
   seat plate 1420
      unlocking operation member 1421
      locking member 1422
   longitudinal axis direction D11
   transverse axis direction D12
   carrier 3500, 3600
      box body 3510, 3610
         body 3511, 3611
            side support member 36111
            first connecting member 35116
            second connecting member 35117
            upper support member 36112
               first sheet-like member 36112a
               second sheet-like member 36112b
               third sheet-like member 36112c
               folding part FL1, FL2, FL3
         bottom support member 3512, 3612 box body 3110, 3210
            body 3111, 3211
               side support member 31111, 32111
                  first sub-support member 31111a, 32111a
                  second sub-support member 31111b, 32111b
                  connecting piece 31111c
                  bottom side edge 31111m
                  top side edge 31111n
               upper support member 31112, 32112
                  first sheet-like member 31112a, 32112a
                  second sheet-like member 31112b, 32112b
                  third sheet-like member 31112c, 32112c
               first connecting member 31116
               second connecting member 31117
               third connecting member 31118, 32118
               fourth connecting member 31119, 32119
            bottom support member 3112, 3212, 3412
               bottom part 3112a
               peripheral wall 3112b
               connecting part 31121
               strap guiding mechanism 31122
               groove 31123
               engaging part 31124
               base housing 31125
                  upper surface 31125a
                  lower surface 31125b
                  first recess 31125c
                  engaging gap 31125d
               fixing bracket 31126
                  engaging member 31126a
                  fixing base 31126b
                  connecting bar 31126c
               support plate 31127
                  upper surface 31127a
                  lower surface 31127b
                  second recess 31127c
               bracket assembly 3413
                  engaging member 34131
                  connecting support 34132
                  strap guiding mechanism 34133
               carrying handle 3115
               first window 3116, 3216
               first window covering 3116a, 3216a
               second window 3117, 3217
               second window covering 3117a, 3217a
                  first part 31171a
                  second part 31172a
               side door 3217b
               cushion 3101, 3201
            fixing strap assembly 3300
               restraining strap assembly 3310
                  restraining strap 3311
                  first connecting end 3312
                  hole 3314
               extending component 3320
                  extending strap 3321
                  adjusting part 3322
                  third connecting end 3323
                  fourth connecting end 3324
            carrier 4300
               body 4301
               bottom part 4302
               carrying handle 4303
               observation window 4304
               ventilation opening 4305
               bottom support member 4308
               engaging member 4311
            strap guiding mechanism 433
               channel 4330
                  first port 43301
                  second port 43302
                  side introduction port 43303
                  sloped wall 43304
               shell 433A
                  bottom shell 4331
                     first convex rib 43311
                        top end 433111
                     second convex rib 43312
                        top end 433121
                  top shell 4332
                     operating port 43320 reinforcing member 43321
                  cam 4333
                     hole 43330
                     tooth 43331
                     hole 43332
                     fastener 43335
                  adjusting button 4334
                     concave part 43340
                     connecting shaft 43341
                     hole 43342
                  mounting cavity 4335
            strap guiding mechanism 434
               opening 4340
            fixing strap assembly 4500
               restraining strap assembly 451
                  first connecting end 4511
                     hole 45110
                  second connecting end 4512
                  restraining strap 4513
               extending component 452
                  extending strap 4521
                  adjusting part 4522
                  third connecting end 4523
                  fourth connecting end 4524
            vehicle seat 4600

### DETAILED DESCRIPTION

In the following, exemplary embodiments of the present disclosure will be described in detail with reference to the accompanying drawings. Whereas it is susceptible to various modified and alternative forms of the present disclosure, specific embodiments thereof are illustrated by way of example in the accompanying drawings. However, the present disclosure should not be construed as being limited to the embodiments illustrated herein; on the contrary, the present disclosure will encompass all modifications, equivalents, and alternatives that fall within the spirit and scope of the present disclosure.

The present disclosure will be described in detail below with reference to the accompanying drawings.

In the first aspect of the present disclosure, provided are a carrier 1100 capable of being mounted on a vehicle seat and/or on a wheeled moving device, and a wheeled moving device 1400 configured to be used with the carrier 1100.

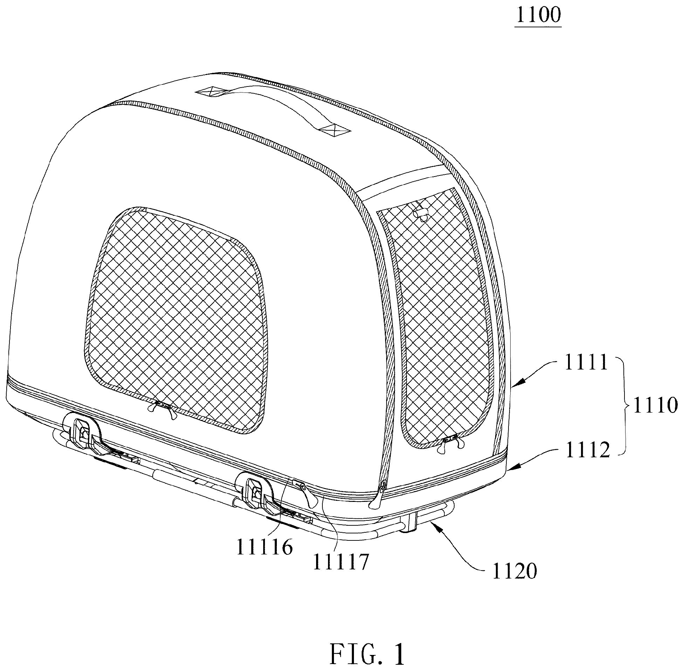

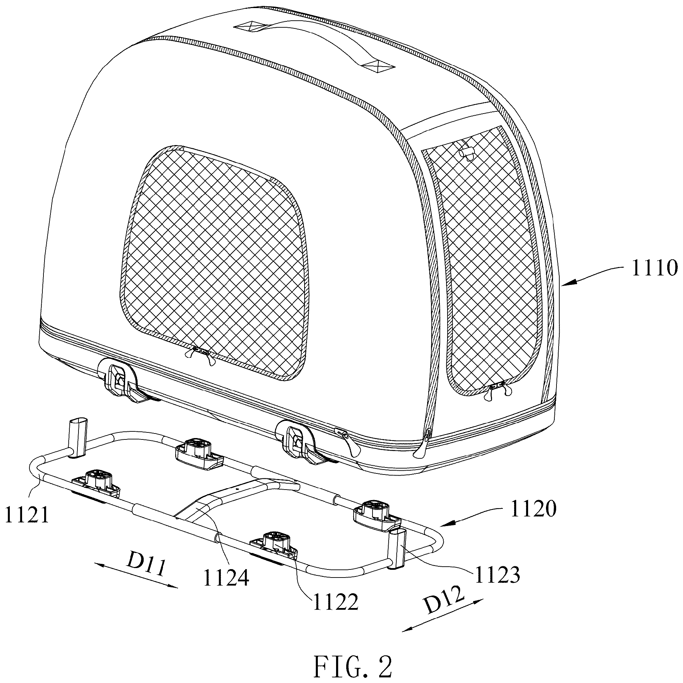

Referring to FIGS. 1 and 2, FIG. 1 shows a perspective view of a carrier 1100 according to a first embodiment of the first aspect of the present disclosure; and FIG. 2 shows a partially exploded perspective view of the carrier 1100 shown in FIG. 1, in which a box body of the carrier 1100 is separated from a bracket assembly thereof.

As shown in FIG. 1, the carrier 1100 includes a box body 1110 and a bracket assembly 1120. The box body 1110 includes a body 1111 and a bottom support member 1112, and the body 1111 is detachably covered on the bottom support member 1112 to form an accommodating space for a pet to sit therein. The bottom support member 1112 forms the bottom part of the box body 1110, and the body 1111 forms four side surfaces and a top surface of the box body 1110. The body 1111 is detachably connected to the bottom support member 1112 by at least one connection assembly. Specifically, in an example, the at least one connection assembly includes a first connecting member 11116 and a second connecting member 11117 detachably connected to each other. The first connecting member 11116 is disposed on the body 1111 and the second connecting member 11117 is disposed on the bottom support member 1112. In a specific example, the first connecting member 11116 and the second connecting member 11117 are mutually engaged zippers, but are not limited thereto in the present disclosure, and may also be, for example, mutually engaged snap-fit structures, sliding buckle structures, hook and loop fasteners (Velcro), hooks and loops, etc., and preferably, a flexible connection is adopted. Alternatively, in another example, the body 1111 and the bottom support member 1112 may be fixedly connected (e.g., sewn together) or integrally formed.

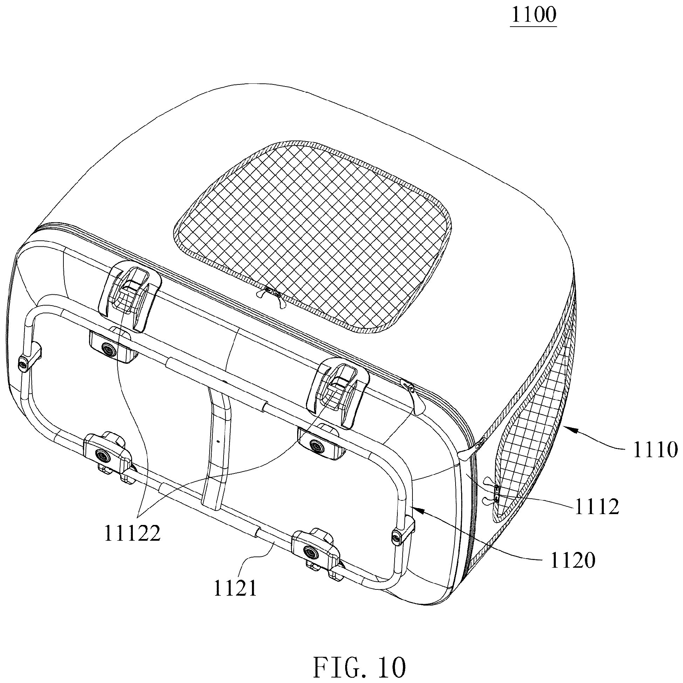

In conjunction with FIGS. 1 and 2, the bracket assembly 1120 is configured to secure the carrier 1100 to a moving device, such as a vehicle or a stroller, etc., and/or the fixing base assembly. The box body 1110 is mounted on the bracket assembly 1120 via the bottom support member 1112. As shown in FIG. 2, the bracket assembly 1120 includes an engaging member 1121, which is engaged with an engagement structure correspondingly disposed on the moving device, and the specific manner of engagement will be specifically illustrated in the following description of FIGS. 10 to 15. As an example, the engaging member 1121 may be configured as an annular structural member, and arranged to be spaced apart from the bottom part of the bottom support member 1112. A center of the engaging member 1121 substantially corresponds to a center of the box body 1110 in a vertical direction.

In addition, the bracket assembly 1120 may also include a plurality of first connecting brackets 1122, which are disposed symmetrically between the engaging member 1121 and the box body 1110. For example, four first connecting brackets 1122 are disposed on the engaging member 1121 to be connected to the bottom part of the box body 1110, and are spaced apart from each other by a certain distance, for example, respectively disposed near four corners of the bottom part of the box body 1110, thereby providing balanced and stable support for the box body 1110. Furthermore, the four first connecting brackets 1122 may be symmetrically disposed on two opposite sides of the engaging member 1121 along a transverse axis direction with respect to a longitudinal axis direction D11 and a transverse axis direction D12 of the carrier 1100. For example, as shown in FIG. 2, the four first connecting brackets 1122 are symmetrically disposed on two long sides of the annular structure of the engaging member 1121. However, it should be understood that the engaging member of the present disclosure is not limited to the above-mentioned shape, and the first connecting bracket 1122 is not limited to the above-mentioned quantity. Optionally, in another example, only two first connecting brackets 1122 may be provided, and the two first connecting brackets 1122 are disposed diagonally. In other examples, the number of the first connecting brackets 1122 may also be three, five, etc.

Furthermore, the bracket assembly 1120 may further include a plurality of second connecting brackets 1123, which are respectively mounted on two opposite sides of the engaging member 1121 along the longitudinal axis direction D11 and connected to the bottom part of the box body 1110, so as to further stabilize the bonding of the box body 1110 to the bracket assembly 6120. It should be noted that, although only two second connecting brackets 1123 are shown in FIG. 2, the present disclosure is not limited thereto, and four, six, etc., second connecting brackets 1123 may also be provided. In addition, it should be noted that, in other examples, one of the first connecting bracket 1122 and the second connecting bracket 1123 may be provided, as long as it is capable of stabilizing the bonding of the box body 1110 to the bracket assembly 1120, which is not limited in the present disclosure.

In addition, the bracket assembly 1120 may further include a structural reinforcement member 1124, which is approximately located in a middle of the engaging member 1121 along the longitudinal axis direction D11. A central part of the structural reinforcement member 1124 is curved toward the bottom part of the box body 1110, that is, a height of the central part of the structural reinforcement member 112 is higher than heights of the ends on the two sides thereof, so that the bracket assembly 1120 has a higher impact resistance and is not easily deformed when subject to force. However, it should be noted that the structure of the bracket assembly disclosed in the present disclosure is not limited to that of this embodiment.

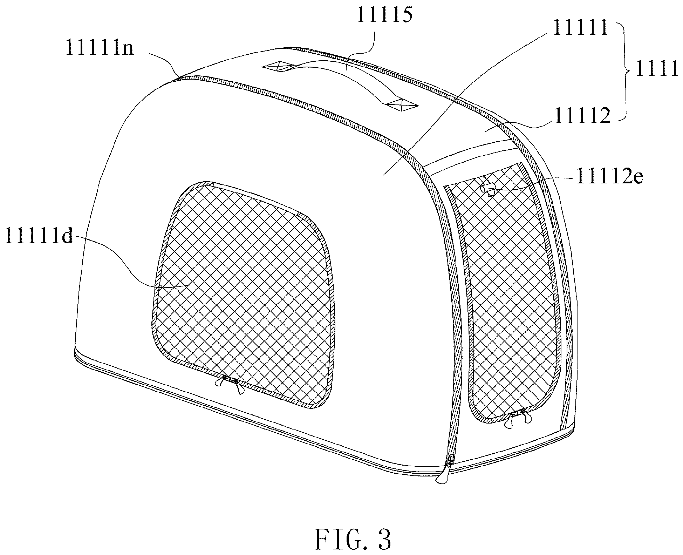

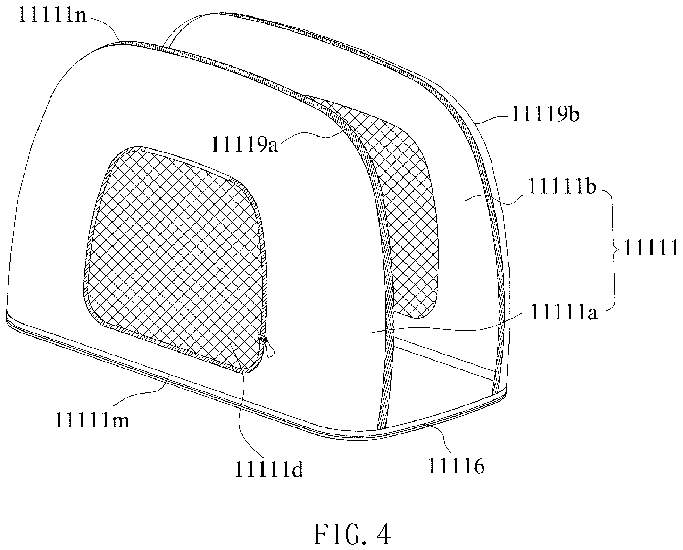

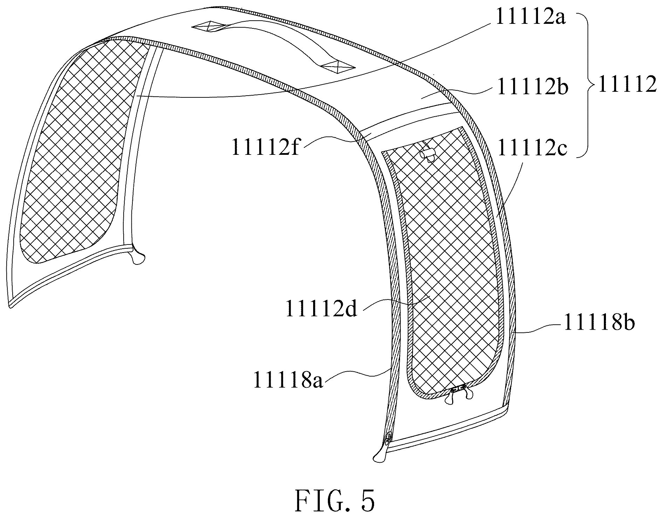

Referring to FIGS. 3 to 5, FIG. 3 shows a perspective view of the body 1111 shown in FIG. 1, FIG. 4 shows a perspective view of a side member of the body 1111 shown in FIG. 3, and FIG. 5 shows a perspective view of an upper support member of the body 1111 shown in FIG. 3.

As shown in FIG. 3, the body 1111 includes a first support member and a second support member, e.g., in this embodiment, the first support member is the side support member 11111 and the second support member is the upper support member 11112. The side support member 11111 and the upper support member 11112 are detachably connected to each other, for example, by a zipper connection or by other connection means such as Velcro. However, it is understood that the first support member and the second support member may also be configured to be other structures according to the configuration of the body 1111, for example, the first support member and the second support member may also be configured to be two halves of the body 1111, respectively, i.e., have a mirror symmetrical shape.

Further, in an example, in conjunction with FIGS. 3 and 4, the side support member 11111 may include a first sub-support member 11111a and a second sub-support member 11111b, which are detachably connected to the two sides of the upper support member 11112, respectively, (i.e., the upper support member 11112 is between the first sub-support member 11111a and the second sub-support member 11111b) to form the body 1111. The first sub-support member 11111a and the second sub-support member 11111b form two side surfaces of the body 1111. More specifically, the first sub-support member 11111a and the second sub-support member 11111b are independent of each other and each has a bottom edge 11111m extending approximately horizontally and an arched-shaped top edge 11111n. The bottom edges 11111m of the first sub-support member 11111a and the second sub-support member 11111b are detachably connected to corresponding edges of the bottom support member 1112, respectively, and the top edges 11111n thereof are detachably connected to two sides of the arch-shaped upper support member 11112, respectively.

In an example, as shown in FIG. 4, the first sub-support member 11111a and the second sub-support member 11111b may be connected to each other by a connecting component, e.g., a first connecting member 11116, so as to be connected together to the bottom support member 1112 (see FIG. 2). Specifically, the first connecting member 11116 is connected to the bottom edges 11111m of the first sub-support member 11111a and the second sub-support member 11111b. Preferably, the first connecting member 11116 is made of a flexible material (i.e., foldable, deformable, etc.), e.g., a zipper structure, fabric, etc., such that the first sub-support member 11111a and the second sub-support member 11111b are capable of being folded relative to each other after the side support member 11111 is detached from the bottom support member 1112 (see FIG. 2) and separated from the upper support member 11112.

Preferably, the side support member 11111 may be made of a material having a certain pressure-bearing capacity to prevent deformation during transportation, e.g., a cardboard, a plastic sheet, a metal sheet, etc., but the present disclosure is not limited thereto.

As shown in FIGS. 3 and 5, the upper support member 11112 is formed by three sheet-like members 11112a, 11112b, 11112c connected to each other and is arch-shaped. The three sheet-likes 11112a, 11112b, 11112c may form a top surface and other two sides of the body 1111, for example, the first sheet-like member 11112a and the third sheet-like member 11112c form the other two side surfaces of the body 1111 (i.e., are located between the sides formed by the first sub-support member 11111a and the second sub-support member 11111b), respectively, and the second sheet-like member 11112b forms a top surface of the body 1111. Preferably, each of the three sheet-like members 11112a, 11112b, 11112c may be made of a material having a certain pressure-bearing capacity to prevent deformation during transportation, e.g., a cardboard, a plastic sheet, a metal sheet, etc., but the present disclosure is not limited thereto.

In an example, the first sheet-like member 11112a and the second sheet-like member 11112b may be connected to each other by a connection structure (not shown due to obstruction) and are capable of being folded relative to each other, and the second sheet-like member 11112b and the third sheet-like member 11112c may be connected to each other by a further connection structure (referring to "11112f" shown in FIG. 5) connected to each other and capable of being folded relative to each other, such that the first sheet-like member 11112a and the third sheet-like member 11112c are capable of being folded inwardly relative to the second sheet-like member 11112b. That is, the sheet-like members on the two sides are capable of being folded inwardly, i.e., folded relative to the middle sheet-like member, such that the detached upper support member 11112 can be folded to reduce its volume, thereby further reducing the space required for storage and reducing the transportation cost. The above connection structure and the further connection structure may each be a flexible connection structure, e.g., a sewing fabric, etc., or may each be a rigid connection structure. In a specific example, the upper support member 11112 may be formed as a one-piece member (e.g., by sewing, etc.) by the above connection structure, i.e., the three sheet-like members 11112a, 11112b, 11112c are formed integrally. In addition, as shown in FIG. 3, a carrying handle 11115 may be disposed on a top side of the upper support member 11112 (i.e., the second sheet-like member 11112b), e.g., disposed at a central position on the top side, for carrying the carrier.

In an example, as shown in FIG. 5, two side edges of the upper support member 11112 are respectively provided with third connecting members 11118a, 11118b, which may be engaged with fourth connecting members 11119a, 11119b (see FIG. 4) disposed correspondingly to the top edges 11111n of the first sub-support member 11111a and the second sub-support member 11111b, respectively. The third connecting members 11118a, 11118b are detachably connected to the fourth connecting members 11119a, 11119b, respectively, to enable the upper support member 11112 to be detachably connected to the first sub-support member 11111a and the second sub-support member 11111b. The third connecting members 11118a, 11118b and the fourth connecting members 11119a, 11119b may be flexible connecting members, such as zipper structures, but the present disclosure is not limited thereto. In other examples, the third connecting members 11118a, 11118b and the fourth connecting members 11119a, 11119b may also be snap-fit structures, sliding buckle structures, hook-and-loop fits, etc. Specifically, as shown in FIG. 4, the fourth connecting member 11119a (e.g., a zipper structure) disposed on the first sub-support member 11111a extends over the entire top edge 11111n of the first sub-support member 11111a. Additionally or alternatively, the fourth connecting member 11119b (e.g., a zipper structure) disposed on the second sub-support member 11111b extends over the entire top edge of the second sub-support member 11111b. Correspondingly, as shown in FIG. 5, each of the third connecting members 11118a, 11118b (e.g., zipper structures) on the two sides of the upper support member 11112 may extend over an entire side edge of the upper support member 11112, and preferably, the third connecting members 11118a, 11118b are disposed on two long side edges of the upper support member 11112, respectively. With this design, the upper support member 11112 and the side support member 11111 are capable of achieving full closure, resulting in a more reliable connection between them. Moreover, the upper support member 11112 may be completely separated from the side support members 11111 on its two sides along its long side edges, so that the box body 1110 can be completely disassembled when the carrier is not in use, or the upper support member 11112 can be partially separated from the side support member 11111 on either side as required (i.e., there is a controllable degree of separation between the upper support member 11112 and the side support members 11111 to facilitate the user removing or placing items from or into the box body 1110).

With the above structure, when the upper support member 11112 and the side support members 11111 are connected (i.e., partially or completely connected along the side edges of the upper support member 11112 and the top edges of the side support members 11111), the body 1111 (or box body 1110) is in an unfolded state. When the carrier is not in use, the upper support member 11112 is capable of being separated from the side support members 11111, and by means of a connection structure (in particular a flexible connection structure) between the sheet-like members 11112a, 11112b, 11112c of the upper support member 11112 and/or by means of a connecting component (in particular a flexible connecting component, e.g., the first connecting member 11116) between the first sub-support member 11111a and the second sub-support member 11111b of the side support members 11111, the side support members 11111 and/or the upper support member 11112 can be in a stowed state, thereby reducing the space required for storage. When the carrier is required to be used again, it is sufficient to unfold the side support members 11111 and/or the upper support member 11112 and connect them together. Such a design provides the advantages of simple operation, low cost, small storage space and ease of transportation.

Furthermore, in conjunction with FIGS. 3 to 5, any sides of the body 1111 may be provided with a window covering capable of being opened and closed, so as to provide a window for the pet to enter and exit the box body. Specifically, a window covering 11111d may be disposed on any one of the side support members 11111 of the body 1111. Additionally or alternatively, a window covering 11112d may be disposed on the upper support member 11112 of the body 1111. For example, as shown in FIG. 4, each of the two side support members 11111 is provided with the window covering 11111d. For another example, as shown in FIG. 3, surfaces of the upper support member 11112 close to two ends thereof may be provided with window coverings 11112d, respectively. These window coverings may be closed and opened by zipper structures. Each of the zipper structures may be formed by a single zipper (such as a structure shown on the side support members 11111 in FIG. 4), or may be formed by two zippers zipped in opposite directions (as shown in FIG. 3).

Furthermore, as shown in FIG. 3, the window coverings 11111d, 11112d may be flexible fabrics, such as mesh fabrics. However, it should be understood that the present disclosure is not limited thereto, and the window coverings 11111d, 11112d may also be other forms of fabric or flexible materials. A retention member 11112e that maintains the window covering opening may be disposed on the upper part of the window covering.

Certainly, the body of the present disclosure is not limited to the above-described structure, e.g., the side support members of the body may also be connected integrally or formed integrally, which will be described below.

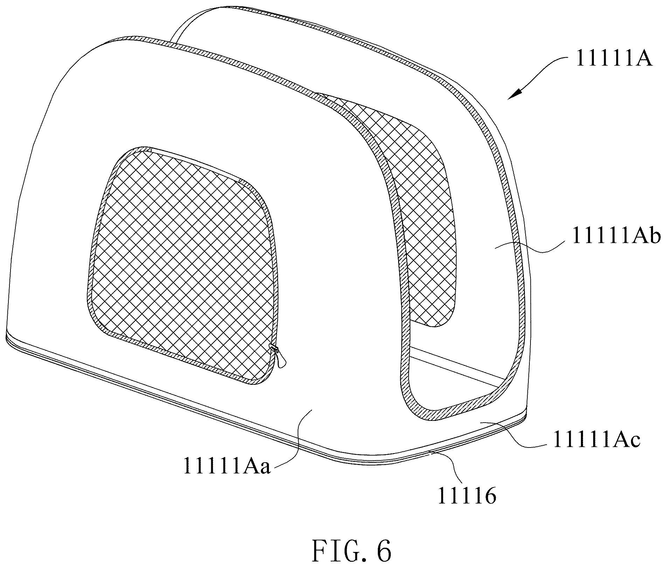

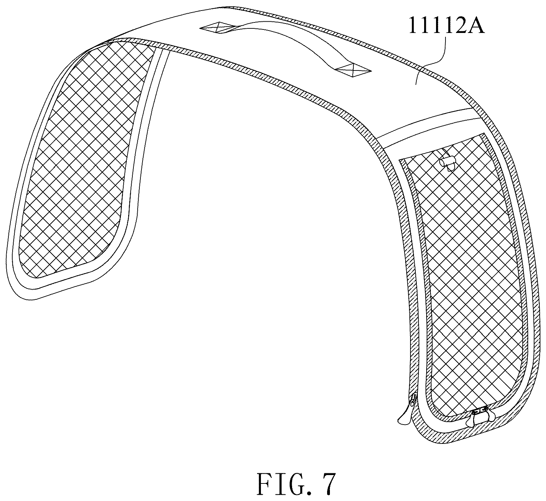

Referring to FIGS. 6 and 7, FIG. 6 shows a perspective view of a side support member 11111A according to a second embodiment of the first aspect of the present disclosure, and FIG. 7 shows a perspective view of an upper support member 11112A fitting with the side support member 11111A shown in FIG. 6.

As shown in FIGS. 6 and 7, in the second embodiment, the body (the assembled body is not shown in this embodiment) includes the side support member 11111A and the upper support member 11112A. The side support member 11111A includes a first sub-support member 11111Aa and a second sub-support member 11111Ab integrally connected by a connecting piece 11111Ac (also referred to as a "connecting component"), i.e., the connecting piece 11111Ac is integrally formed with the first sub-support member 11111Aa and the second sub-support member 11111Ab. The connecting piece 11111Ac is connected to two ends of the first sub-support member 11111Aa and the second sub-support member 11111Ab, respectively. More specifically, as shown in FIG. 6, bottom edges of the first sub-support member 11111Aa and the second sub-support member 11111Ab are integrally connected to a bottom edge of the connecting piece 11111Ac along a peripheral direction. The top edges of the first sub-support member 11111Aa and the second sub-support member 11111Ab are formed as arches and are integrally connected by top edge of the connecting piece 11111Ac, such that the side support member 11111A is detachably connected between the upper support member 11112A (see FIG. 7) and the bottom support member (not shown in this embodiment). For example, the connecting piece 11111Ac of this embodiment may be a sewing fabric. Preferably, the connecting piece 11111Ac may be a flexible material, allowing the two sub-support members of the side support members to be pressed against each other when stowed, thereby reducing the volume of the box body after folded. In this embodiment, the first connecting member 11116 may be connected to the bottom edges of the first sub-support member 11111Aa and the second sub-support member 11111Ab and the bottom edge of the connecting piece 11111Ac, so as to fit with the second connecting member (not shown) disposed on the bottom support member (not shown) to realize a detachable connection.

Furthermore, the upper support member 11112A in this embodiment may also be detachably connected to the side support member 11111A by means of a flexible connecting member (e.g., a zipper structure). For example, the flexible connecting member may be disposed at an edge of the upper support member 11112 and at a top edge (and more specifically, extending over the entirety of this edge) formed by the top edges of the first sub-support member 11111Aa and the second sub-support member 11111Ab and the top edge of the connecting piece 11111Ac, to allow the upper support member 11112A to be fully closed and fully separated relative to the side support members 11111A. Similarly, a flexible connecting member may be disposed at a bottom edge formed by the bottom edges of the first sub-support member 11111Aa and the second sub-support member 11111Ab and the bottom edge of the connecting piece 11111Ac to fit with the flexible connecting member disposed on the bottom support member.

Certainly, in this embodiment, a window covering may be disposed on the side support member and/or the top support member, which is similar to the aforementioned embodiment shown in FIGS 3 to 5, and therefore will not be repeated herein.

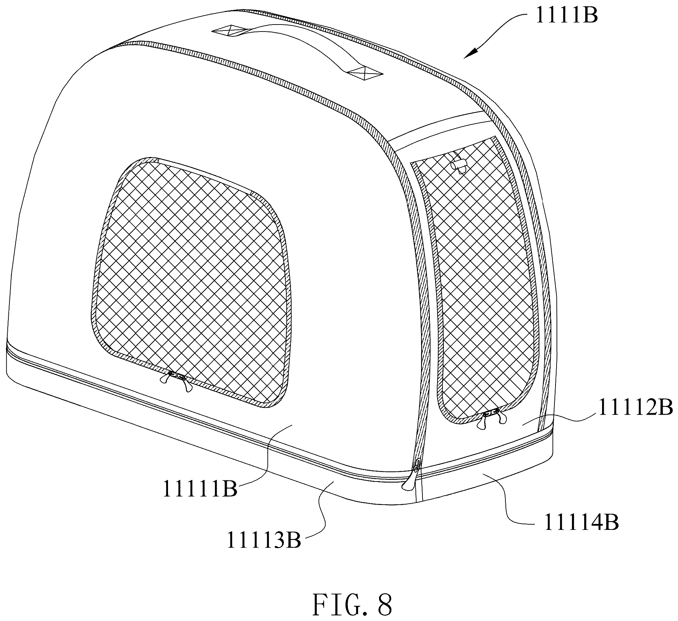

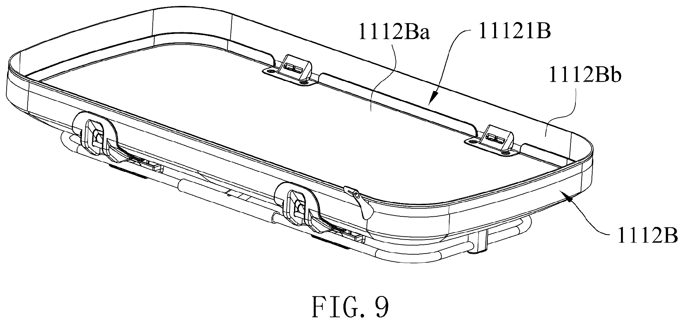

Referring to FIGS. 8 and 9, FIG. 8 shows a perspective view of a body 1111B of a carrier according to a third embodiment of the first aspect of the present disclosure, and FIG. 9 shows a perspective view of a bottom support member 1112B of the carrier shown in FIG. 8.

As shown in FIGS. 8 and 9, extending parts 11113B, 11114B extending downwardly may be further provided at a bottom edge of the body 1111B of the carrier in this third embodiment, and are configured to be inserted in a corresponding insertion groove 11121B disposed in the bottom support member 1112B. In an example, the insertion groove 11121B may be formed by a tab on a bottom part 1112Ba of the bottom support member 1112B close to a peripheral wall 1112Bb and the peripheral wall 1112Bb. Preferably, the insertion groove 11121B extends along the peripheral wall 1112Bb of the bottom support member 1112B. It should be noted that shown in FIG. 8 are a side support member 11111B and a top support member 11112B similar to those in the embodiments shown in FIGS. 3 to 5, with extending parts 11113B extending downwardly from bottom edges of the side support member 11111B of the body 1111B, and optionally or alternatively, extending parts 11114B extending downwardly from bottom edges of the top support member 11112B. However, it should be understood that an extending part may also be disposed at the bottom edge of the body of the embodiment shown in FIG. 6.

By providing the insertion groove, together with the zipper connection between the body and the bottom support member, the body of the box body can be more securely connected to the bottom support member, thereby avoiding sliding or tilting between the body and the bottom support member.

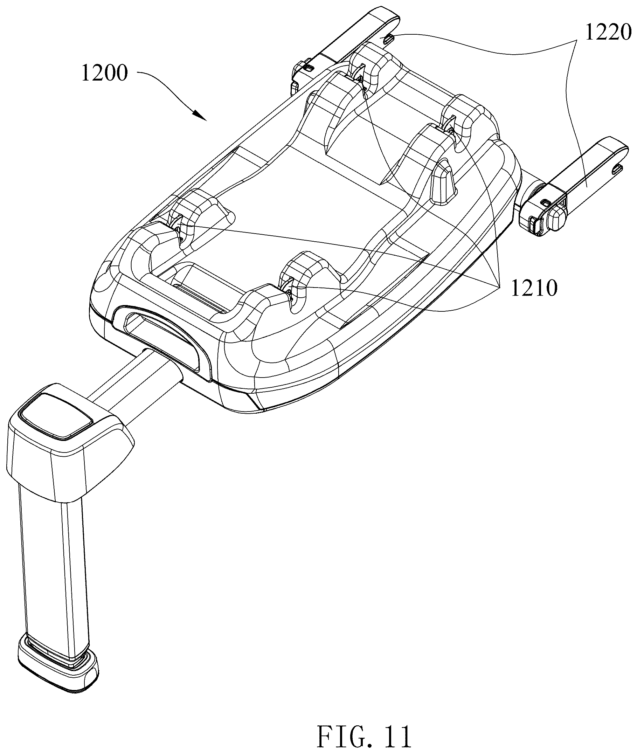

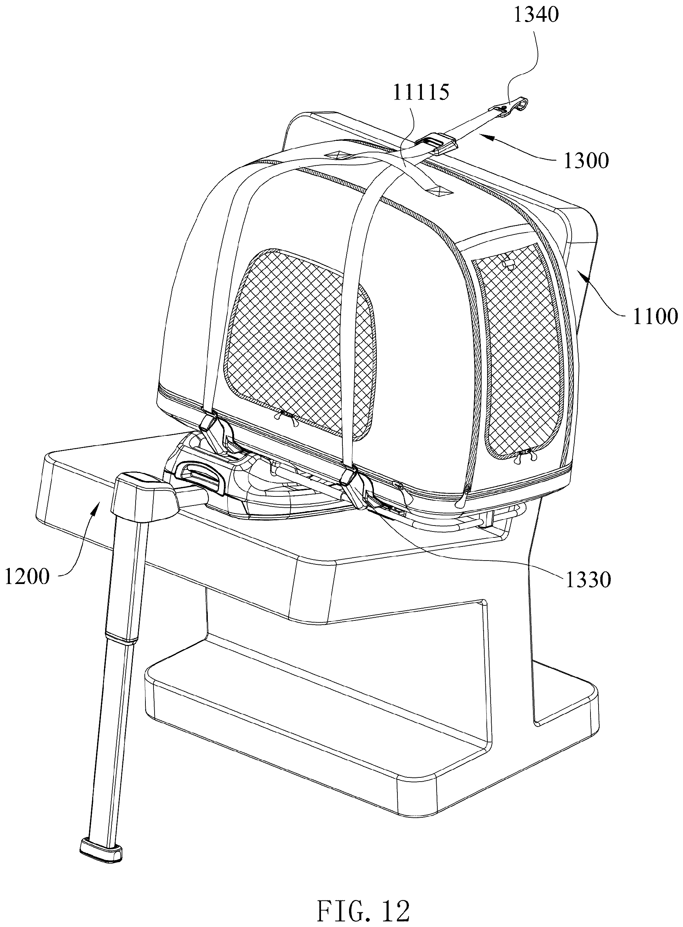

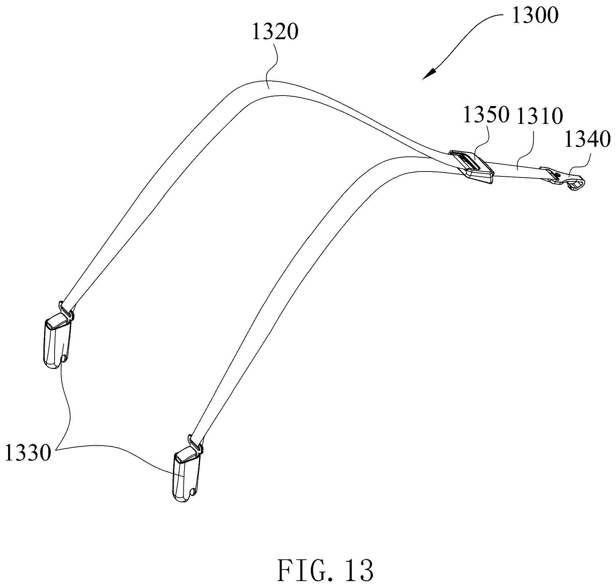

Referring to FIGS. 10 to 13, FIG. 10 shows a bottom perspective view of a carrier according to a first aspect of the present disclosure, FIG. 11 shows a perspective view of a fixing base assembly 1200 that is fitted with the carrier 1100 shown in FIG. 10, FIG. 12 shows a perspective view of the carrier mounted to a vehicle by the fixing base assembly 1200, and FIG. 13 shows a perspective view of the fixing strap assembly 1300 shown in FIG. 12.

As shown in conjunction with FIGS. 10 to 11, the bracket assembly 1120 of the carrier 1100 of the first aspect of the present disclosure is disposed below the bottom support member 1112 of the box body 1110, and is capable of being secured to the fixing base assembly 1200 mounted to the vehicle, for example, by engaging the engaging member 1121 of the bracket assembly 1120 with the engaging part 1210 of the fixing base assembly 1200. As a result, the carrier 1100 is secured to the vehicle seat by engaging the connecting device 1220 (e.g., an ISOFIX fixing member) of the fixing base assembly 1200 with a socket disposed on the vehicle. Optionally, as shown in FIG. 11, four engaging parts 1210 may be symmetrically disposed on the fixing base assembly 1200, such that the bracket assembly 1120 is secured to the fixing base assembly 1200 at four engaging points, thereby making the positioning of the two more stable.

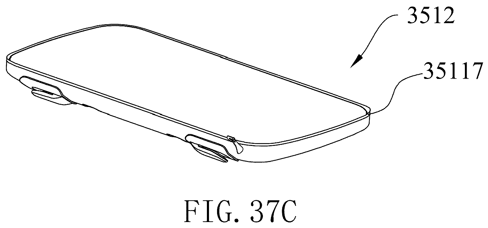

In addition, the carrier 1100 may be further secured with a Top Tether connection. As shown in FIG. 12 and FIG. 13, a fixing strap assembly 1300 may also be configured to secure the carrier 1100 to the vehicle. Specifically, the fixing strap assembly 1300 includes a first strap 1310 and a second strap 1320, and the first strap and the second strap may be collectively referred to as strap bodies. In an example, an end of the first strap 1310 may be configured to be connected to a corresponding anchoring position (such as a Top Tether interface) above or on top of the vehicle seat by means of a connecting device 1340 provided thereon (such as a Top Tether fastener), and the other end is connected to an end of the second strap 1320. Accordingly, the other end of the second strap 132 may be connected directly (e.g., fixedly connected to the bracket assembly 1120 of the carrier 1100 in a wrapped manner), or detachably connected by a connecting device 1330 (e.g., a LATCH fastener) to another corresponding anchoring position on the carrier 1100 and/or the vehicle seat. In this example, two second straps 1320 may be provided, both of which are connected to the other end of the first strap 1310. Optionally or alternatively, the second straps 1320 may be configured as a strap folded in two for use, e.g., the strap passes through an associated connecting member (e.g., an annular element, etc.) disposed at the other end of the first strap 1310 to form an end of each of the second straps 1320 and each of two ends of the strap forms the other end of each of the second straps 132 that is connected to the carrier 1100 and/or vehicle seat. Certainly, the fixing strap assembly 1300 of the present disclosure is not limited to the structure described above. Furthermore, an adjuster 1350 (also referred to as an "adjusting part") may be further provided, which is disposed on the second straps 1320 and/or the first strap 1310 and configured to adjust a length of the second straps 1320 and/or that of the first strap 1310. In another example, a connecting device 1340 (e.g., a Top Tether fastener) may be disposed at an end of the first strap 1310, and a connecting device 1330 (e.g., a LATCH fastener) may be disposed at the other end of the first strap 1310. An end of each of the second straps 1320 may be movably disposed on the first strap 1310 by the adjuster 1350 (configured to adjust a length of the second straps 1320), and another connecting device 1330 is disposed at the other end of each of the second straps 1320. Correspondingly, as shown in FIG. 37C, the outward periphery on each of two sides of the bottom support member 1112 is provided with two connecting parts 11122 configured to be connected with the connecting device 1330.

When the carrier 1100 is to be secured to a vehicle seat, as shown in an assembly diagram of FIG. 12, after the carrier 1100 is secured to the vehicle seat by the fixing base assembly 1200, the two connecting devices 1330 of the fixing strap assembly 1300 may also be connected to the two connecting parts 11122 on one side of the bottom support member 1112, respectively, and another end of the fixing strap assembly 1300 (i.e., the connecting device 1340 of the first strap 1310) passes through the carrying handle 11115 disposed on the top side of the carrier 1100 to be connected with a corresponding interface (e.g., a Top Tether interface) disposed on the vehicle, thereby further limiting the lateral sliding, tilting, etc. of the carrier 1100, so as to more firmly secure the carrier 1100.

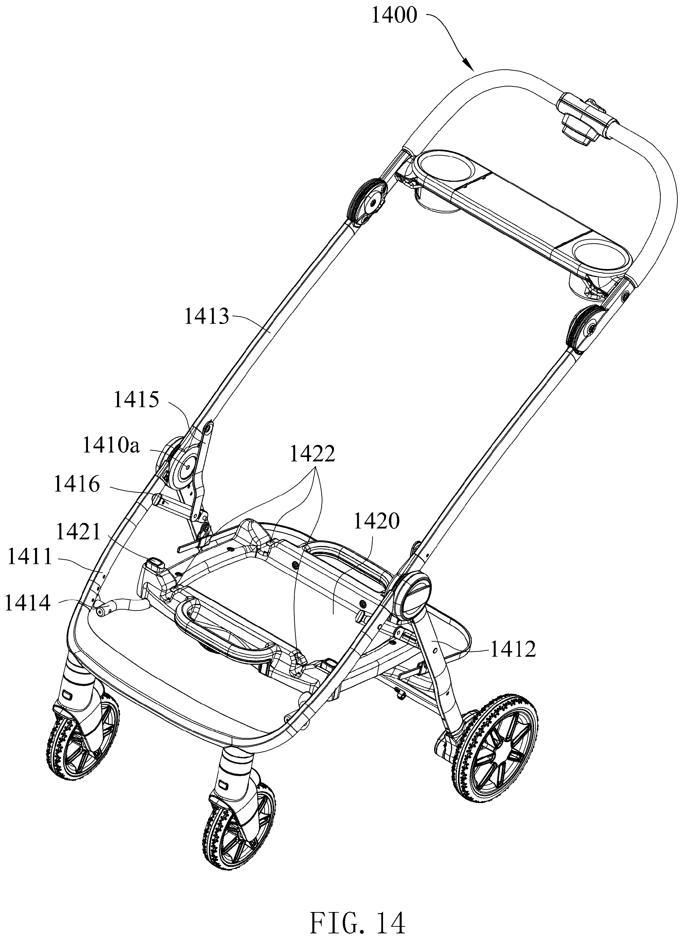

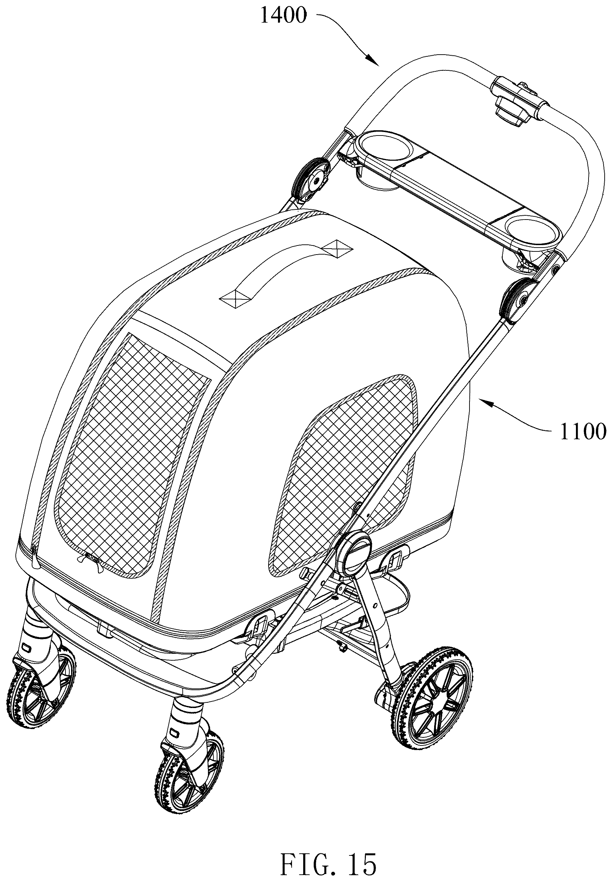

Furthermore, referring to FIGS. 14 and 15, FIG. 14 shows a perspective view of the wheeled moving device 1400 fitted with the carrier 1100 shown in FIGS. 10, and FIG. 15 shows a perspective view of the carrier 1100 mounted to the wheeled moving device 1400.

In conjunction with FIGS. 10, 14, and 15, the carrier 1100 may also be locked on the wheeled moving device 1400, such as a stroller, by means of a bracket assembly 1120 disposed thereunder. As shown in FIG. 14, a frame 1410 of the wheeled moving device 1400 includes a front support bar 1411, a rear support bar 1412, and an upper support bar 1413 pivotally connected to each other at a pivot point 1410a.lower ends of the front support bar 1411 and the rear support bar 1412 are respectively connected with a wheel assembly. In an example, the front support bar 1411 may be a U-shaped structure, the rear support bar 1412 may be formed by two parallel bars fixedly connected by a crossbar, and each of two ends of the front support bar 1411 is pivotally connected to an end of each of the two bars of the rear support bar 1412. In addition, the frame 1410 is further provided with a seat plate 1420 configured to secure the carrier 1100. In an example, the seat plate 1420 may be disposed substantially horizontally by the support frame 1414 at a position below the pivot point 1410a and close to the wheel assembly disposed at the lower end of the front support bar 1411 to allow for a relatively large space above the seat plate 1420, thereby adapting to carriers with different sizes (e.g., of varying heights) of box bodies.

Specifically, when the carrier 1100 is to be secured to the wheeled moving device 1400, the engaging member 1121 (see FIG. 10) of the bracket assembly 1120 can be engaged into the locking member 1422 of the locking structure of the seat plate 1420 to allow the carrier 1100 to be secured to the seat plate 1420 of the wheeled moving device 1400; and when the carrier 1100 is not in use, the engaging member 1121 can be disengaged from the locking member 1422 by pressing an unlocking operation member 1421 disposed on the seat plate 1420 (e.g., exposed from an upper side of the seat plate 1410 as shown in FIG. 14) to cause the locking member 1422 to release the engaging member 1121 (see FIG. 10), so that the carrier 1100 can be detached and the frame 1410 can be folded to stow the carrier 1100 and the frame 1410. Preferably, four locking structures may be symmetrically disposed on the seat plate 1420 for more secure positioning between the carrier 1100 and the wheeled moving device 1400.

Certainly, it should be noted that the seat plate 1410 may also be disposed at other positions (e.g., at different heights) of the frame 1410, e.g., a position near or higher than the pivot point 1410a by means of the first connecting component 1415 (with one end thereof being connected to the upper support bar 1413) and a second connecting component 1416 (with one end thereof being connected to the front support bar 1411) as shown in FIG. 14, and the present disclosure is not limited thereto.

The second aspect of the present disclosure also provides carriers capable of being mounted on vehicle seats and/or wheeled moving devices.

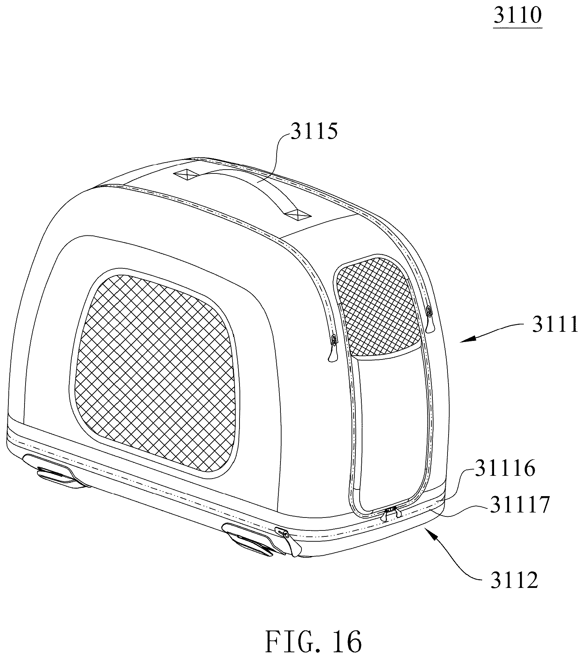

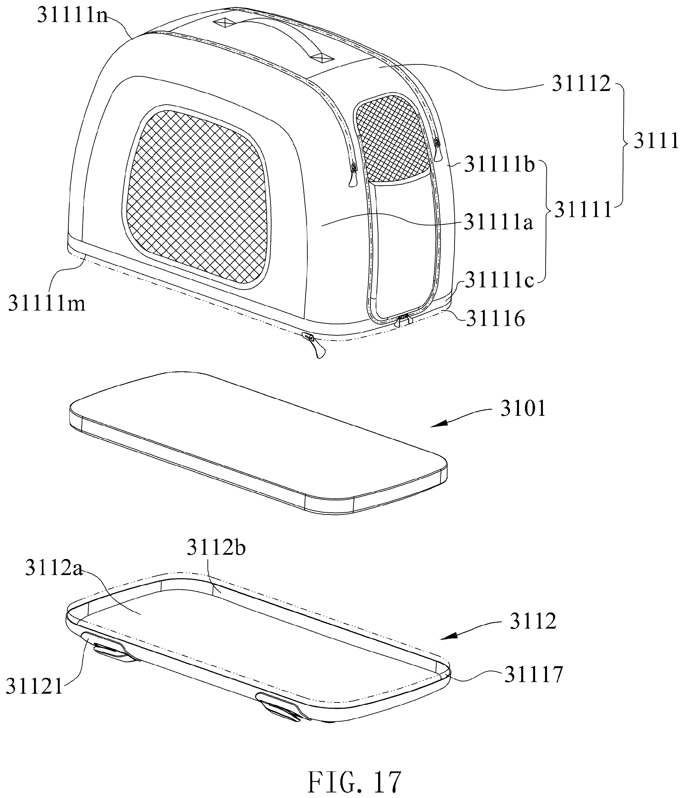

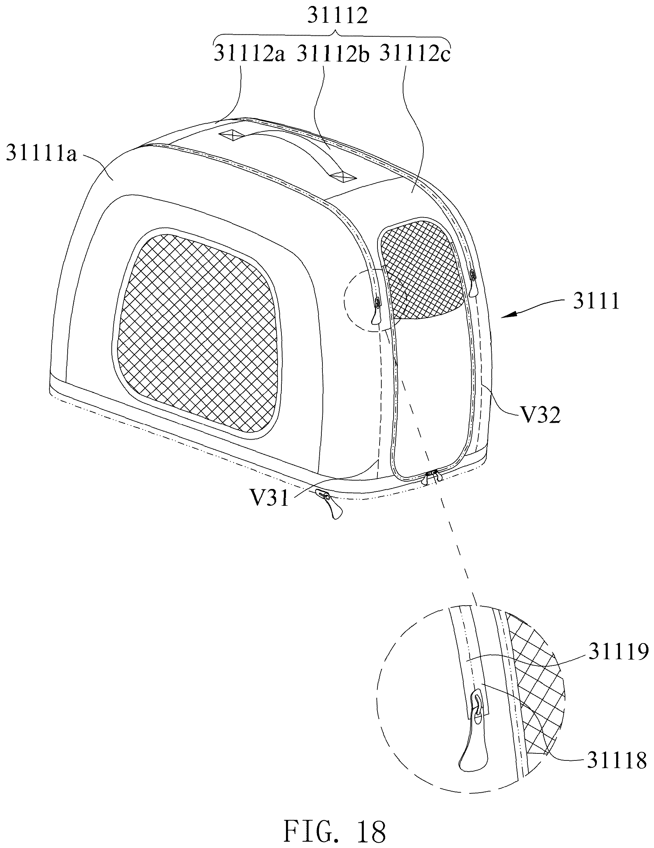

Referring to FIGS. 16 to 18, FIG. 16 shows a box body 3110 of a carrier according to a first embodiment of the second aspect of the present disclosure, FIG. 17 shows an exploded perspective view of the box body 3110 shown in FIG. 16, and FIG. 18 shows a perspective view of the body 3111 of the box body 3110 shown in FIG. 17.

As shown in FIG. 16 and FIG. 17, a carrier of an embodiment of the present disclosure includes a box body 3110. The box body 3110 includes a body 3111 and a bottom support member 3112. The body 3111 forms four side surfaces and a top surface of the box body 3110, and the bottom support member 3112 forms a bottom part of the box body 3110.

In an embodiment, the body 3111 is detachably connected to the bottom support member 3112, and more specifically, covered on the bottom support member 3112 to form an accommodating space for a carrying pet together with the bottom support member 3112. In a specific example, the body 3111 may be detachably connected to the bottom support member 3112 by at least one first connection assembly. The first connection assembly may have a first connecting member 31116 disposed on the body 3111, and a second connecting member 31117 disposed at a corresponding position on the bottom support member 3112, the corresponding connecting members 31116, 311117 have detachable structures that are engaged with each other, e.g., zipper structures, snap-fit structures, sliding buckle structures, hook-and-loop fasteners, hook and loop structures, etc. Optionally, the first connection assembly (i.e., the first connecting member 31116 and the second connecting member 31117) has a flexible structure. Specifically, as shown in FIG. 17, the first connecting member 31116 of the at least one first connection assembly may be disposed at a bottom edge of the body 3111, so as to be detachably connected to the second connecting member 31117 at an upper edge of the bottom support member 3112.

Referring to FIGS. 17 and 18, the body 3111 may include a first support member and a second support member. In this embodiment, the first support member may be a side support member 3111, the second support member may be an upper support member 31112, and the side support member 31111 and the upper support member 31112 may be at least partially detachably connected to each other by the at least one second connection assembly. That is, the side support member 31111 and the upper support member 31112 are connected to each other, and at least a part of the side support member 31111 can be separated from the upper support member 31112 by the at least one second connection assembly. The second connection assembly may include mating structures respectively disposed on the side support member 31111 and the upper support member 31112, for example, the mating structures may be mutually engaged zipper structures, snap-fit structures, sliding buckle structures, hook-and-loop fasteners, hook-and-loop structures, etc. Optionally, flexible connection structures are used.

In an example, as shown in FIG. 17, the side support member 31111 may include a first sub-support member 31111a and a second sub-support member 31111b, the first sub-support member 31111a and the second sub-support member 31111b are disposed on two sides of the upper support member 31112 (e.g., symmetrically disposed with respect to the upper support member 31112), and at least a part of the first sub-support member 31111a and at least a part of the second sub-support member 31111b may each be detachably connected to the upper support member 31112 by the second connection assembly. The first sub-support member 31111a and the second sub-support member 31111b of the side support member 31111 form two side surfaces of the body 3111, and the upper support member 31112 forms the top surface and at least a part of the other two side surfaces of the body 3111.

Specifically, as shown in FIG. 17, each of the first sub-support member 31111a and the second sub-support member 31111b of the side support member 31111 has a bottom edge extending substantially horizontally and a top edge in an arched shape, and their top edges are respectively connected to the two sides of the upper support member 31112. It should be noted that the bottom edge 31111m and the top edge 31111n of the first sub-support member 31111a are exemplarily shown, but it can be understood that the second sub-support member 31111b may also have the same structure, i.e., a structure that is mirror-symmetric to the first sub-support member 31111a. Furthermore, herein, "a bottom edge extending substantially horizontally" means that the bottom edge of the first sub-support member and/or the second sub-support member may extend horizontally, may extend at a small inclined angle (e.g., ≤ 5 degrees), or may have an edge with a shape similar to a wave, a polyline, or the like in a horizontal direction.

According to a preferred embodiment of the present disclosure, one part of the first support member is fixedly connected (e.g., non-detachably connected) to the second support member. For example, the side support member 31111 (i.e., the first support member) is connected to the two sides of the upper support member 31112 (i.e., the second support member) over the entire length of the side edges of the upper support member 31112. An upper part of the side support member 31111 (i.e., near the top surface of the body 3111) is detachably connected to the upper support member 31112, e.g., by the second connection assembly, and the other connecting portion between the two are connected in a non-detachable (i.e., fixed) manner, e.g., by sewing, integral forming, or the like, such that a part of the side support member 31111 cannot be separated from the upper support member 31112.

In conjunction with FIGS. 17 and 18, corresponding connecting members in the second connection assembly may be disposed at at least a part of the top edge of the side support member 3111, and at corresponding positions of the two sides of the upper support member 31112, respectively. Specifically, in an embodiment, taking the first sub-support member 31111a and its corresponding side edge of upper support member 31112 as an example (see FIG. 18), the second connection assembly may have a third connecting member 31118 and a fourth connecting member 31119 detachably connected to each other. The third connecting member 31118 is disposed at the side edge of the upper support member 31112 (i.e., the side edge connected to the first sub-support member 31111a) and extends along at least a part of the side edge, and the fourth connecting member 31119 is correspondingly disposed at the top edge 31111n of the first sub-support member 311111a (i.e., extends along at least a part of the top edge 31111n). As a result, at least a part of the top edge 31111n of the first sub-support member 31111a is detachably connected to one side edge of the upper support member 31112 by the detachable connection between the third connecting member 31118 and the fourth connecting member 31119. Similarly, another set of third connecting member and fourth connecting member (not marked in the accompanying drawings) may be disposed at the other side edge of the upper support member 31112 and the top edge of the second sub-support member 31111b, respectively. In an example, the third connecting members 31118 on the two sides of the upper support member 31112 are disposed symmetrically.

Optionally, a part of the side support member 31111 is fixedly connected (e.g., non-detachably connected) to the upper support member 31112. That is, the third connecting member 31118 extends along a part of the side edge of the upper support member 31112, the fourth connecting member 31119 extends along a part of the top edge 31111n of the first sub-support member 31111a (or the second sub-support member 31111b), and the third connecting member 31118 and the fourth connecting member 31119 are disposed in correspondence and detachably connected to each other such that a part of the side support member 31111 is capable of being separated from the upper support member 31112. The other part of the side support member 31111 is connected to a corresponding part of the upper support member 31112 in a non-detachable manner, e.g., by sewing, integral forming, or the like. Similarly, at least a part of the top edge of the second sub-support member 31111b may also be connected to the other side edge of the upper support member 31112 by the same removable structure as described above, and optionally, a part of the second sub-support member 31111b is fixedly connected to the upper support member 31112. For ease of illustration, the positions where the top edges of the first sub-support member 31111a and the second sub-support member 31111b are connected to the corresponding side edges of the upper support member 31112 are shown in FIG. 18 by dashed lines V31, V32, respectively, but it should be noted that the dashed lines V31, V32 are only virtual lines to assist in understanding and do not imply a line structure that is inherent in the structure itself. Furthermore, the top edges indicated by the dashed lines V31, V32 shown in FIG. 18 is only an example of this embodiment and the boundaries and lengths of the top edges may also be varied according to the overall shape of the side support member, i.e., the present disclosure is not limited to the above embodiment.

In an embodiment, the third connecting member 31118 and the fourth connecting member 31119 of the second connection assembly have flexible structures, such as zipper structures that are engaged with each other, such that the parts of the side support member 31111 and the upper support member 31112 that are disassembled from each other can be bent and/or folded.

In addition, as shown in FIG. 17, the first sub-support member 31111a and the second sub-support member 31111b may be connected as one body by a connecting piece 31111c, e.g., the first sub-support member 31111a and the second sub-support member 31111b may be integrally formed with the connecting piece 31111c to form the side support member 31111. At this point, the bottom edges of the first sub-support member 31111a and the second sub-support member 3111 1b (the bottom edge 31111m of the first sub-support member 31111a is shown in FIG. 17) together with the bottom edge of the connecting piece 31111c form a bottom edge of the body 3111 (i.e., the bottom edge of the entire side support member 31111). Optionally, the connecting piece 31111c may be a flexible material, allowing the two sub-support members of the side support member 31111 to be pressed against each other towards each other when the box body is stowed, thereby reducing the volume of the box body after folded.

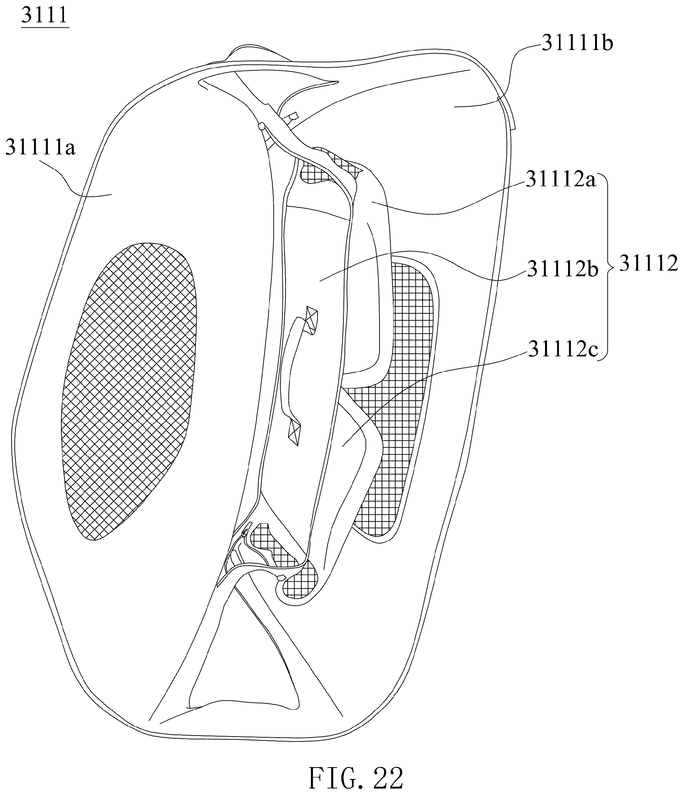

In an embodiment, as shown in FIG. 18, the upper support member 31112 may include three sheet-like members connected to each other and may be arched when connected with the side support member 3111. Specifically, the upper support member 31112 may include a first sheet-like member 31112a, a second sheet-like member 31112b, and a third sheet-like member 31112c. The first sheet-like member 31112a and the third sheet-like member 31112c form a part of the other two side surfaces of the body 3111, respectively, and the second sheet-like member 31112b forms a top surface of the body 3111. Optionally, the first sheet-like member 31112a and the third sheet-like member 31112c respectively have a flexible structure (i.e., bendable) such that the upper support member 31112 is capable of being folded with respect to the side support member 31111 by the flexible structures of the first sheet-like member 31112a and the third sheet-like member 31112c when a part of the side support member 31111 is separated from the upper support member 31112. A specific folding process will be described below in conjunction with FIGS. 22 to 24.

In a specific example, the upper support member 31112 may have an integral structure, i.e., the three sheet-like members 31112a, 31112b, 31112c are formed as one body, for example, by means of a connection such as sewing. However, the present disclosure is not limited thereto, and the three sheet-like members may also be detachably connected to each other by flexible connection structures or the like.

In addition, as shown in FIG. 16, a carrying handle 3115 may be disposed on a top side of the upper support member 31112 (i.e., the second sheet-like member 31112b), e.g., disposed at a central position on the top side, for carrying the carrier. In an example, the carrying handle 3115 may be a flexible webbing. Optionally or alternatively, the carrying handle 3115 may also be formed by a rigid plastic.

In an embodiment, as shown in FIG. 17, the box body 3110 may further be provided with a cushion 3101 for bottom cushioning. In an example, the cushion 3101 may be disposed in an accommodating space formed by the bottom part 3112a and the perimeter wall 3112b of the bottom support member 3112. Specifically, A cover (not shown, such as a cover covering) may be sleeved outside the bottom support member 3112, and the cushion 3101 may be enclosed in the cover. For example, the cover may be detachably sleeved on the outside of the bottom support member 3112, and preferably, may be made of the same material as the body 3111, but the present disclosure is not limited thereto.

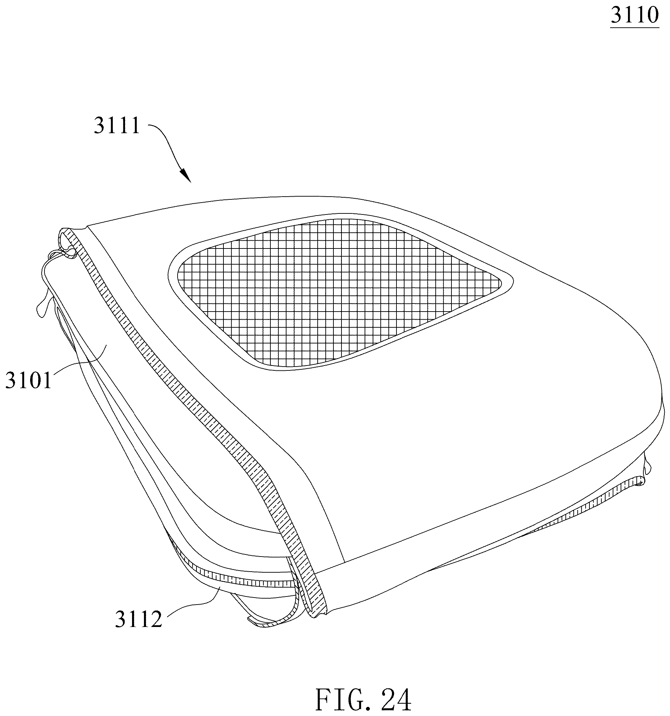

Referring again to FIGS. 16 and 17, the outward periphery (i.e., the outer side of the peripheral wall) on each of two sides of the bottom support member 3112 may be provided with two connecting parts 31121, which are configured to be connected to a connecting device for mounting the box body 3110 to the vehicle seat, and specifics will be described below in connection with FIG. 24. It should be noted that when the bottom support member 3112 is wrapped by the cover, the connecting part 31121 is exposed to be connected to the vehicle seat.

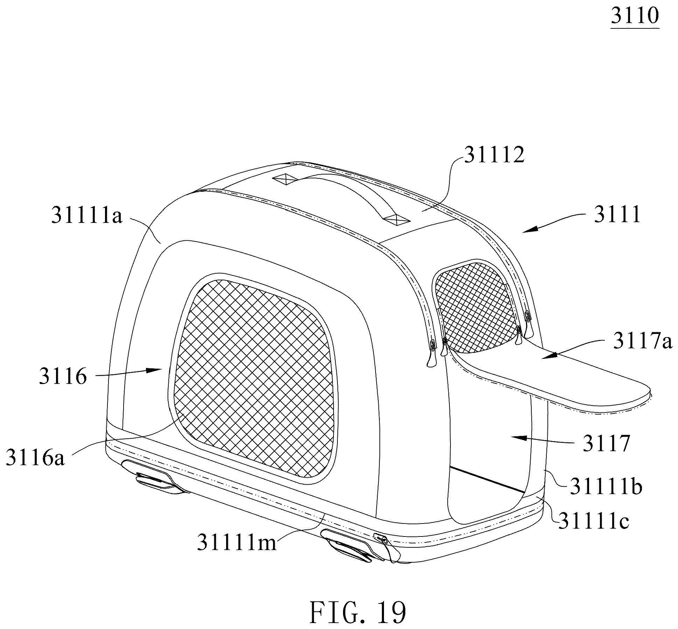

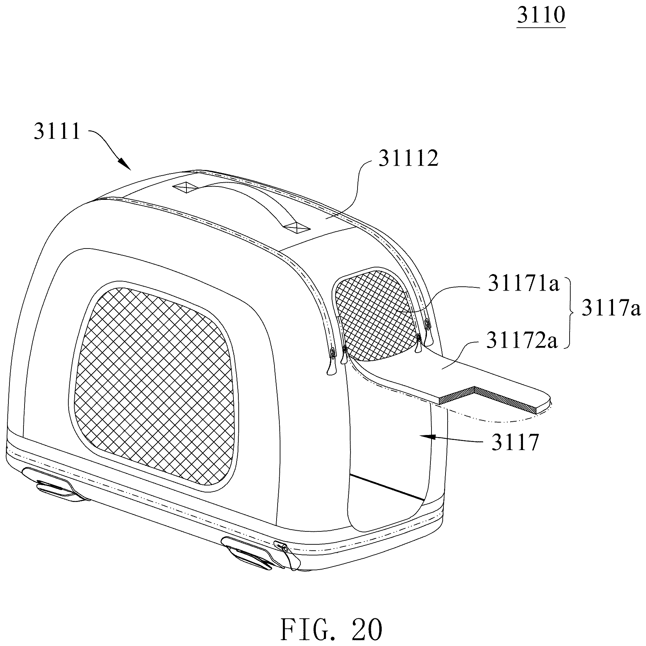

Referring to FIGS. 19 and 20, FIGS. 19 and 20 show another perspective view of the box body 3110 shown in FIG. 16, in which at least a part of a second window covering 3117a is separated from the body 3111.

As shown in FIG. 19, one or more sides of the body 3111may be provided with windows, e.g., a first window 3116 and a second window 3117, for viewing a pet inside the box body 3110, and/or providing an opening for the pet to enter and exit the box body. The first window 3116 and the second window 3117 may be provided with a first closure member and a second closure member, respectively, to close and/or shield the first window 3116 and the second window 3117. In an example, the first closure member may be a first window covering 3116a covering the first window 3116, and the second closure member may be a second window covering 3117a that covers the second window 3117.

Specifically, in an example, the first window 3116 is disposed on the first sub-support member 31111a and/or the second sub-support member 31111b of the side support member 31111 of the body 3111 and is provided with a first window covering 3116a configured to cover and shield the first window 3116. Optionally, the first window covering 3116a may be fixedly connected to the first window 3116 (e.g., its window frame), i.e., the first window 3116 is unopenable, but the present disclosure is not limited thereto, and the first window covering 3116a may also be detachably connected at the first window 3116. For example, the first window covering 3116a may be made of a transparent material and/or a breathable material, or specifically, the first window covering 3116a may have a mesh structure.

In addition, the second window 3117 may be disposed on the upper support member 31112 of the body 3111, for example, at a position of the upper support member 31112 on the side of the box body 3110, and is provided with a second window covering 3117a configured to cover and shield the second window 3117. Optionally, as shown in FIG. 19, the second window 3117 may extend downwardly from the upper support member 31112 to the connecting piece 31111c, and further, a part of the second window 3117 may be disposed at the connecting piece 31111c of the side support member 3111. A lower edge of the second window 3117 is spaced apart from the bottom edge of the body 3111 (the bottom edge 31111m of the side support member 31111 is shown, i.e., a part of the bottom edge of the body 3111) by a certain distance, i.e., at least a part of the connecting piece 31111c is retained, such that the bottom edges of both the first sub-support member 31111a and the second sub-support member 31111b of the side support member 31111 keep in connection with each other, thereby facilitating the folding and unfolding of the body 3111, as well as connecting the body 3111 to and detaching it from the bottom support member 3112.

In an example, as shown in FIG. 19, the second window covering 3117a is connected to and covers the second window 3117 (e.g., connected at its window frame), and at least a part of the second window covering 3117a is openable relative to the second window 3117. In a preferred embodiment, a part of the second window covering 3117a is detachably connected to the second window 3117 and the other part thereof is non-detachably connected to the second window 3117. For example, an upper side of the second window covering 3117a is fixedly connected to the second window 3117, the other part thereof may be detachably connected to the second window 3117 such that the second window covering 3117a may be folded upwardly to open the second window 3117.

In an example, the second window covering 3117a may be made of a transparent material or a mesh structure. Optionally or alternatively, the second window covering 3117a may have different materials or thicknesses, for example, a part of the second window covering 3117a is made of a transparent material and/or a breathable material (which specifically may be of a mesh structure), and the remaining part may be made of another material, such as the same material as other parts of the body 3111. In addition, different parts of the second window covering 3117a having different materials and/or thicknesses may be connected to the body 3111 in different ways, e.g., a part of the second window covering 3117a is detachably connected to the body 3111 and the other part thereof is non-detachably connected to the body 3111. Optionally, the different materials of the second window covering 3117a may be integrated as one body, i.e., the second window covering 3117a acts as a single component (i.e., a single part).

For example, as shown in FIGS. 19 and 20, the second window covering 3117a has a first part 31171a and a second part 31172a connected to each other. The first portion 31171a may have a transparent and/or breathable material (e.g., a mesh structure) and cover a part of the second window 3117. At least a part of the first part 31171a may be fixedly (e.g., non-detachably) connected to the body 3111. Specifically, the first part 31171a may be disposed at an upper part of the second window 3117 near the top surface of the body 3111, and an upper end of the first part 31171a is fixedly connected to an upper edge of the second window 3117. The second part 31172a may have a material and/or a thickness different from that of the first part 31171a, e.g., a non-transparent material and/or a thickness greater than that of the first part 31171a, and may be detachably connected by a flexible connection structure to the body 31111, and specifically to a lower side of the first part 31171a, so as to cover the other part of the second window 3117.

In addition, as shown in FIG. 19, the first window covering 3116a and/or the second window covering 3117a may be a flexible fabric, such as a mesh fabric, a sponge fabric, etc. It should be understood that the present disclosure is not limited thereto. The first window covering 3116a and/or the second window covering 3117a may also be other forms of fabrics or flexible materials, i.e., materials with bendability or foldability. In an example, the first window covering 3116a and/or the second window covering 3117a may be closed and at least partially opened by a zipper structure (or other flexible detachable connection structure), which may be formed by a single zipper or two zippers that are pulled in opposite directions (as shown in FIG. 19).

It should be noted that the windows and/or the closure members of the present disclosure are not limited to the embodiments described above. The first window 3116 and the second window 3117 may be the same or interchangeable in terms of functions and opening-closing modes, and the first window covering 3116a and the second window covering 3117a may also be identical or interchangeable in terms of functions, materials and connection to the corresponding windows.

Further, an impact resistant material may be disposed in the box body 3110, for example, on any sides of the body 3111 of the box body 3110. When the box body 3110 is placed on the vehicle seat, the impact resistant material may be disposed at least on a side of the body 3111 near a vehicle door of the vehicle to further enhance the safety of the pet inside the box body 3110. However, the present disclosure is not limited thereto, and the impact resistant material may also be disposed on each side of the body 3111, or a side of the body 3111 near a vehicle door and its opposite side, and have a certain thickness. Specifically, the impact resistant material may be a cushioning body. The cushioning body may be configured as a separate component. For example, it may be formed by a cushioning block formed separately, which is then wrapped and sewn in a seat bag, and then secured to a seat fabric (i.e., a seat fabric wrapped around the body 3111, not shown) on any side surfaces of the box body 3110 (e.g., a side near a vehicle door and optionally its opposite side), by means of sewing (fixed connection) or hook-and-loop fasteners or hidden buttons (detachable connection). For example, corresponding hook-and-loop fasteners or hidden buttons are disposed on the seat bag of the cushioning block and on any side surfaces of the box body 3110 (specifically, the seat fabric wrapped around the box body 3110), respectively, to allow the cushioning body to be disposed as required, which facilitates controlling the cost of the carrier and allows for ease of cleaning and maintenance. That is, only one cushioning body may be provided, for example, on a side of the box body 3110 near a vehicle door; or a plurality of cushioning bodies may be provided, for example, on both the side of the box body 3110 near the vehicle door and its opposite side, or on each side of the box body 3110. Specifically, the cushioning body is made of a flexible material, for example, may be formed by a foam body or a plastic body or an elastomeric body. The foam body may be made of inert memory foam or EPP or EPS or EPE or combinations thereof, etc., or may be formed by a foam material combined with a PE plate, etc., and its thickness may be between 20 mm and 60 mm, and preferably 40 mm, but the present disclosure is not limited thereto. The plastic body may be a PC/PP/ABS plastic block, etc. The elastomeric body may be silicone or a spring or an elastic sheet, etc., but the present disclosure is not limited thereto. This cushioning body not only provides a good cushioning effect, but also facilitates the process of forming and subsequent production assembly, which can reduce production costs. Optionally or alternatively, the impact resistant material may be configured as a filler material filled in the seat fabric.

In a specific embodiment, as shown in FIG. 20, the impact resistant material may be disposed at the second window covering 3117a (e.g., the second part 31172a thereof). Optionally or alternatively, the impact resistant material may be configured as a filler material filled in the second part 3117a of the second window covering 3117a, but the present disclosure is not limited thereto, and the two may also be formed by separate structures joined together.

Referring to FIGS. 21 to 24, FIGS. 21 and 22 show a folding process of the body 3111 of the case 3110 of the carrier shown in FIG. 17, and FIGS. 23 and 24 show a folding process of the box body of the carrier shown in FIG. 17.

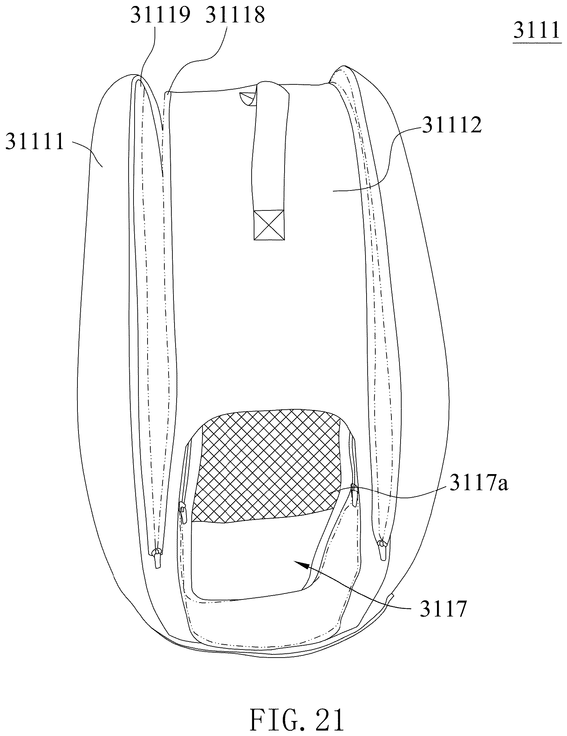

As shown in FIGS. 21 and 22, when the box body 3110 needs to be stowed, the user can detach the body 3111 of the box body 3110 from the bottom support member 3112 (in conjunction with FIG. 17). At this point, at least a part of the upper support member 311112 is separated from the side support member 31111 by the second connection assembly, i.e., the third connecting member 31118 and the fourth connecting member 31119 are detachably connected with each other, and preferably, a part of the upper support member 31112 is non-detachably connected to the side support member 31111 with each other. Further, as shown in FIGS. 21 and 22, a part of the second window covering 3117a disposed at the second window 3117 is detached from the second window 3117 such that an area of a connecting part between the upper support member 31112 and the side support member 31111 is smaller, and thus it is easier to fold and more conducive to enabling the upper support member 32112 to be folded in various attitudes relative to the side support member 32111. In this way, when the body 3111 is folded, since the first sheet-like member 31112a and the third sheet-like member 31112c of the upper support member 31112 (and the second window covering 3117a provided thereon) have flexible structures, the part of the upper support member 31112 separated from the side support member 3111 can be pulled between the first sub-support member and the second sub-support member 31111b of the side support member 31111, such that the second sheet-like member 31112b of the upper support member 31112 (i.e., the top surface of the body 3111) can be placed parallel to the first sub-support member 31111a and/or the second sub-support member 31111b of the side support member 111, and further, the sheet-like members on the two sides of the upper support member 31112 (i.e., the first sheet-like member 31112a and third sheet-like member 31112c) can be folded inwardly with respect to the middle sheet-like member (i.e., the second sheet-like member 31112b), so as to reduce the volume of the upper support member 31112 when folded as much as possible, with reference to FIG. 22 for the folded structure.

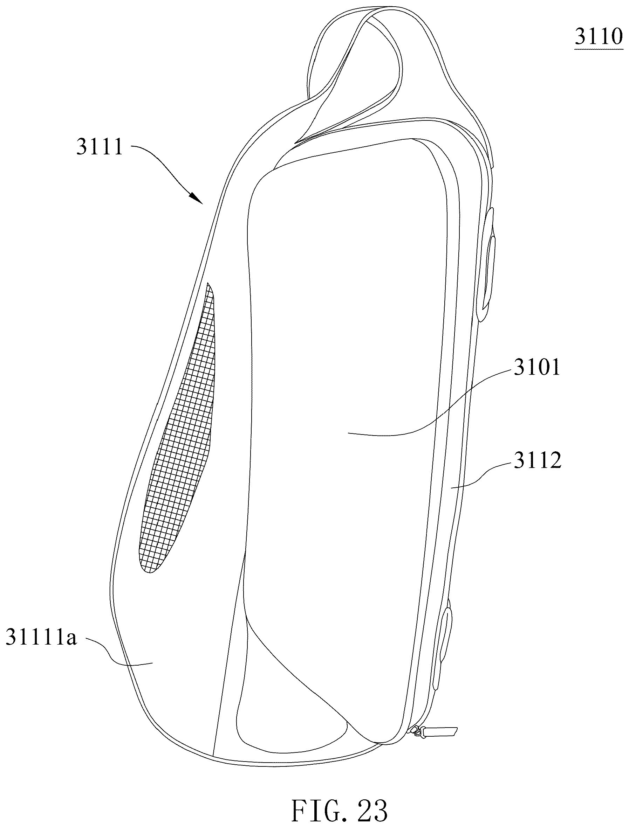

Further, referring to FIGS. 23 and 24, the bottom support member 3112 and the cushion 3101 disposed in the bottom support member 3112 may be placed in the folded body 3111 (e.g., between the first sub-support member 31111a and the second sub-support member 31111b), and then the first sub-support member 31111a and the second sub-support member 3111 1b may be further brought close to each other, thereby minimizing the folded volume of the entire box body 3110 (see Figure 24).

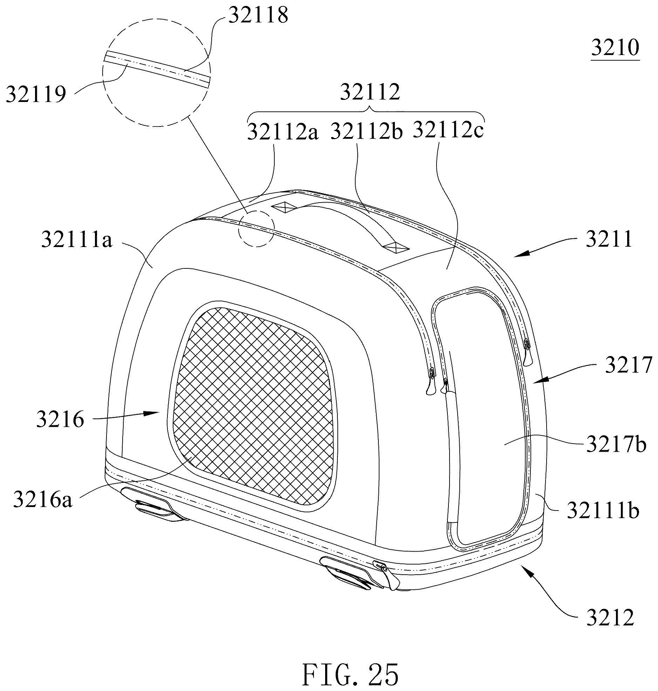

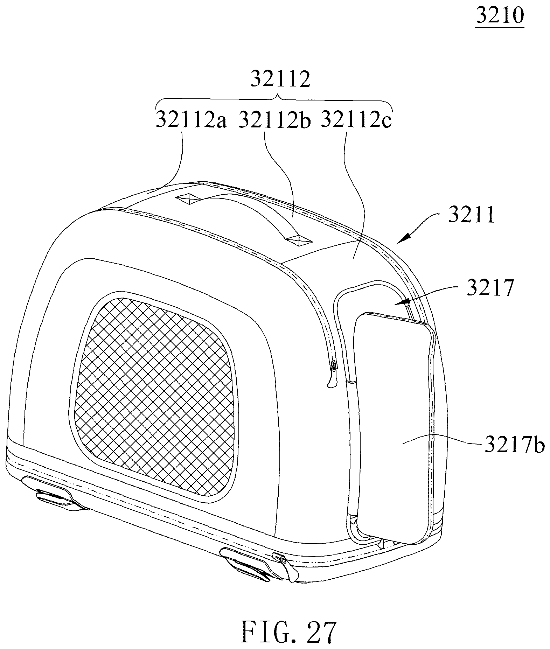

Referring to FIGS. 25 to 27, FIGS. 25 and 26 show a box body 3210 of a carrier according to a second embodiment of the second aspect of the present disclosure from different angles, respectively, and FIG. 27 shows another perspective view of the box body 3210 shown in FIG. 25, with a window 3217 on a side of the box body 3210 being opened.

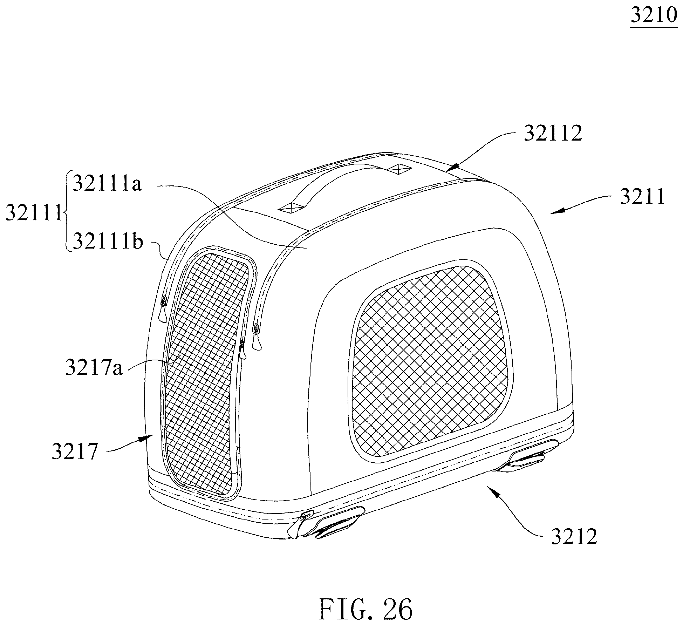

As shown in FIG. 25, similar to the box body 3110 in the aforementioned embodiment, the box body 3210 of the carrier of this embodiment includes a body 3211 and a bottom support member 3212. The body 3211 forms four side surfaces and a top surface of the box body 3210, the bottom support member 3212 forms a bottom part of the box body 3210, and the body 3211 is detachably connected and covered on the bottom support member 3212 to form an accommodating space for carrying a pet together with the bottom support member 3212. Specifically, in conjunction with FIGS. 25 and 26, the body 3211 includes a first support member and a second support member, such as a side support member 32111 and an upper support member 32112. The side support member 32111 includes a first sub-support member 32111a and a second sub-support member 32111b, which form two opposite sides of the body 3211, respectively. The upper support member 32112 includes a first sheet-like member 32112a, a second sheet-like member 32112b, and a third sheet-like member 32112c connected together. The second sheet-like member 32112b forms a top surface of the body 3211. The first sheet-like member 32112a and the third sheet-like member 32112c form at least a part of the other two opposite sides, respectively.

In an example, the side support member 32111 and the upper support member 32112 may be at least partially detachably connected to each other by at least one second connection assembly. For example, a part of the first sub-support member 32111a and a part of the second sub-support member 32111b of the side support member 32111 may be fixedly (e.g., non-detachably) connected to two sides of the upper support member 32112, respectively, and the other respective parts of the two may be detachably connected to the upper support member 32112 by the second connection assembly. Specifically, each of the second connecting assemblies may include a third connecting member 32118 and a fourth connecting member 32119 detachably connected to each other. The third connecting member 32118 is disposed on a side edge of the upper support member 32112 and extends along a part of the side edge, and the fourth connecting member 32119 is disposed at a corresponding position of a top edge of the side support member 32111 (i.e., the first sub-support member 32111a or the second sub-support member 32111b). Optionally, the third connecting members 32118 disposed on the two side edges of the upper support member 32112 are disposed symmetrically, i.e., the two second connecting assemblies are provided symmetrically with respect to the box body 3210.

In addition, one or more sides of the body 3211 may be provided with windows for viewing the pet inside the box body 3210 and/or providing an opening for the pet to enter and exit the box body.

In an example, as shown in FIG. 25, the side support member 32111 of the body 3211 may be provided with a first window 3216. For example, the first window 3216 may be disposed on the first sub-support member 32111a and/or the second sub-support member 32111b of the side support member 32111, i.e., corresponding to a front side surface and/or a rear side surface of the box body 3210 when it is placed in a vehicle, and is configured to be covered by a first closure member, e.g., a first window covering 216a. Optionally, the first window covering 216a may be fixedly connected to the first window 3216 or detachably connected to the first window 3216. The first window covering 216a may be made of a transparent material and/or a breathable material, e.g., a breathable mesh fabric, to allow for air circulation inside and outside of the box body 3210, as well as for a user to view the interior of the box body 3210.

In an optional or alternative example, as shown in FIGS. 25 and 26, a second window 3217 may be disposed at a position of the upper support member 32112 located on a side of the box body 3210, and the second window 3217 is configured to be covered by a second closure member, e.g., the second closure member may include a second window covering 3217a and/or a side door 3217b. At least a part of the second closure member is detachably connected to the body 3211. In an example, a part of the second closure member may be fixedly connected to the body 3211, e.g., to at least a part of a side edge of a window frame of the second window 3217, and other parts thereof may be detachably connected to the second window 3217 by a flexible removable connection structure (e.g., a zipper structure) such that the second closure member may be opened laterally with respect to the second window 3217 (see FIG. 27). The second closure member may be made of a transparent material and/or a breathable material, a shading material, or the same material as other parts of the body 3211 (e.g., a seat fabric), and the second closure member may have a flexible material or a rigid material. In this embodiment, the flexible removable connection structure may be a zipper structure. Specifically, as shown for example in FIGS. 25 and 26, the zipper structure may include a single zipper extending along a part of the periphery of the window 3217 (i.e., the zipper structure has a single zipper head), but the present disclosure is not limited thereto. Alternatively, the zipper structure may be made by two zippers pulled in opposite directions (i.e., the zipper structure has dual zipper heads), as desired.

Specifically, only one second window 3217 may be provided, e.g., located on a side surface (such as a left side surface or a right side surface) of the body 3211. Optionally or alternatively, as shown in FIGS. 25 and 26, two second windows 3217 may be provided, located on opposite sides (i.e., the left side surface and the right side surface) of the body 3211. Correspondingly, the two second windows 3217 may be provided with corresponding second closure members, and the two second closure members may be made of the same material or different materials. For example, one of the second closure members may be a second window covering 3217a, e.g., made of a breathable mesh fabric; and the other closure member may be a side door 3217b (may be located on a side near a vehicle door when the box body 3210 is placed on a vehicle seat). The side door 3217b may be wrapped with the same material as the seat fabric of the body 3211. It should be noted that the present disclosure is not limited to the above embodiments, and positions of the second closure members on the two sides of the body 3211 may be interchangeable and may be made of the same material.

Further, an impact resistant material may be disposed in the box body 3210. The impact resistant material may have a certain thickness and may be disposed on any sides of the body 3211 of the box body 3210, so as to enhance the safety of the pet within the box body 3210. In a specific example, as shown in FIGS. 25 and 27, the impact resistant material may be disposed in the side door 3217b, but the present disclosure is not limited thereto, and the impact resistant material may also be disposed on each side of the body 3211, or on two opposite sides of the body 3211 (e.g., a side near a vehicle door and its opposite side). Specifically, the impact resistant material may be a cushioning body, the cushioning body may be formed by a foam body or a plastic body or an elastomeric body, the specific material of which may be similar to the foregoing embodiments, and thus will not be repeated. In addition, the cushioning body may be configured as a cushioning block formed separately, which is then wrapped and secured (e.g., sewn) in a seat fabric at the side door 3217b, or sewn in a seat bag and detachably secured to the side door 3217b by hook-and-loop fasteners or hidden buttons or the like. By providing such impact resistant material, a better cushioning effect can be provided for the pet inside the box body when the vehicle is involved in an accidental collision, especially when its sides are impacted, thereby enhancing g the protection for the pet.

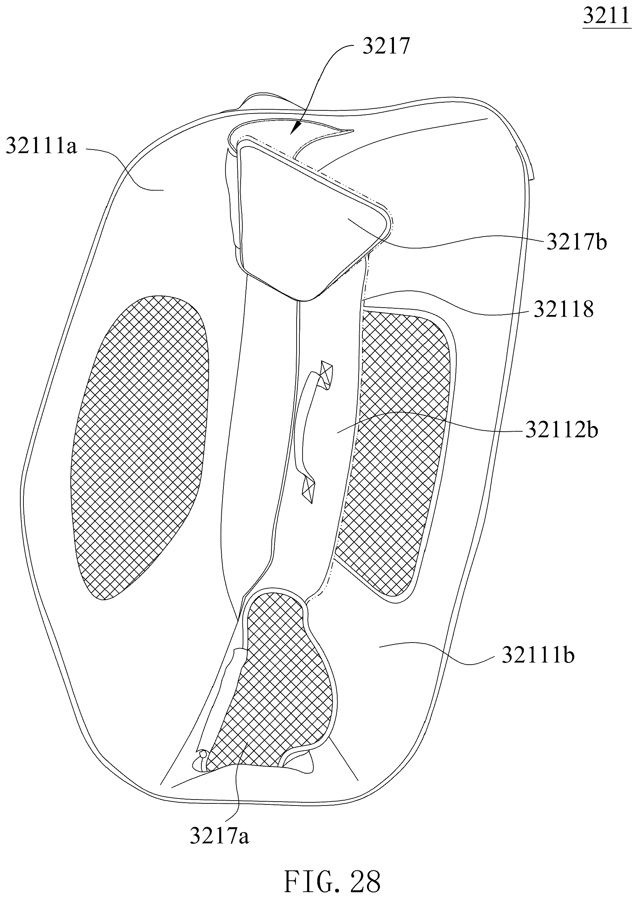

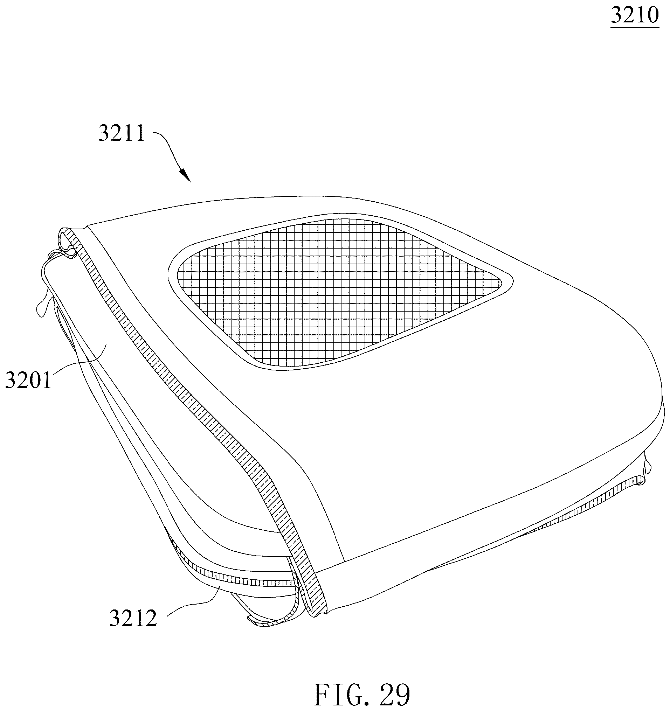

Referring to FIGS. 28 and 29, FIGS. 28 and 29 show a folding process of the box body 3210 and its body 3211 shown in FIG. 25.

As can be seen in conjunction with FIGS. 25 and 27 to 29, when the box body 3210 is to be folded, a user can first separate the body 3211 of the box body 3210 from the bottom support member 3212, and by operating the second connection assembly (i.e., the third connecting member 32118 and fourth connecting members 32119 detachably connected) disposed on a part of the upper support member 32112 and a corresponding part of the side support member 32111, the part on each of the two sides of the upper support member 32112 is separated from the corresponding side support member 32111, and at this point, the other part of the upper support member 32112 is fixedly connected (i.e., non-separable) to the side support member 32111. Further, as shown in FIG. 28, the second closure members (i.e., the second window covering 3217a and the side door 3217b) disposed on the second window 3217 may be opened laterally such that an area of the connecting part of the upper support member 32112 and the side support member 32111 is smaller, and thus it is easier to fold and more conducive to enabling the upper support member 32112 to be folded in various attitudes relative to the side support member 32111.

More specifically, as shown in conjunction with FIGS. 27 and 28, when the third connecting member 32118 is separated from the fourth connecting member 32119, the second sheet-like member 32112b of the upper support member 32112 is completely separated from the side support member 32111 (i.e., the first sub-support member 32111a and the second sub-support member 32111b), and a part of the first sheet-like member 32112a and a third sheet-like member part of 32112c are separated from the side support member 32111. Then, when the second window 3217 on the two sides of the body 3211 are opened, i.e., when the second window covering 3217a and the side door 3217b shown in FIG. 28 are opened laterally, the part of the upper support member 32112 separated from the side support member 32111 is kept in connection with other parts of the body by means of connecting strips at four corners thereof, and the connecting strips are parts between the side edges of the upper support member 32112 and the edges of the second windows 3217. Next, the part of the upper support member 32112 separated from the side support member 32111 can be pulled between the first sub-support member 32111a and the second sub-support member 32111b of the side support member 32111, such that the second sheet-like member 32112b of the upper support member 32112 (i.e., the top surface of the body 3211) can be placed parallel to the first sub-support member 32111a and the second sub-support member 32111b of the side support member 32111, and the second closure members on the two sides of the upper support member 32112 can be folded inwardly (folded laterally) and stacked on the folded second sheet-like member 32112b, so as to reduce the volume of the upper support member 32112 when folded as much as possible, with reference to FIG. 28 for the folded structure.

Further, referring to FIG 29, the bottom support member 3212 and the cushion 3201 disposed in the bottom support member 3212 may be placed in the folded body 3211 (e.g., between the first sub-support member 32111a and the second sub-support member 32111b), and then the first sub-support member 32111a and the second sub-support member 32111b may be further brought close to each other, thereby minimizing the folded volume of the entire box body 3210.

In the present disclosure, by providing two second connecting assemblies on the body 3211 and providing detachable connection structures, e.g., four zipper structures, at the second window 3217, partial separation and relative folding between various parts of the body 3211 can be realized, which not only facilitates connecting and detaching for storage, but also provides the folded box body 3210 with a relatively volume, thereby reducing the cost of transportation. In addition, the box body 3210 of the present disclosure has relatively few number of zipper structures, which reduces the cost, and there is always a part of the various parts that is interconnected and cannot be completely disassembled, which avoids a problem of failure to function properly due to a loss of a certain part of the various parts after the various parts are completely disassembled, and ensures the normal use and durability of the product.

It should be noted that the terms "front", "rear", "left" and "right" involved in the above embodiments refer to the orientations of the box bodies 3110, 3210 when placed on a vehicle seat or other moving device, e.g., "front" refers to a direction of advancement of the vehicle or the moving device, etc., but the present disclosure is not limited thereto.

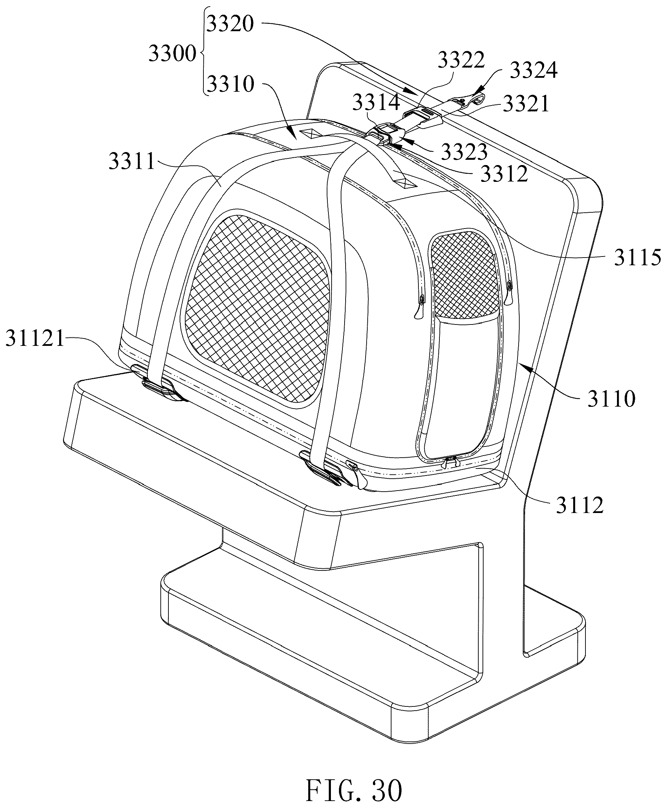

Referring to FIG. 30, FIG. 30 shows a perspective view of a carrier mounted on a vehicle seat according to a second aspect of the present disclosure. For ease of illustration, a process of mounting the carrier on the vehicle seat is described below by using the box body 3110 as an example, but it should be clear that the process is equally applicable to the box body 3210 in the above embodiment.

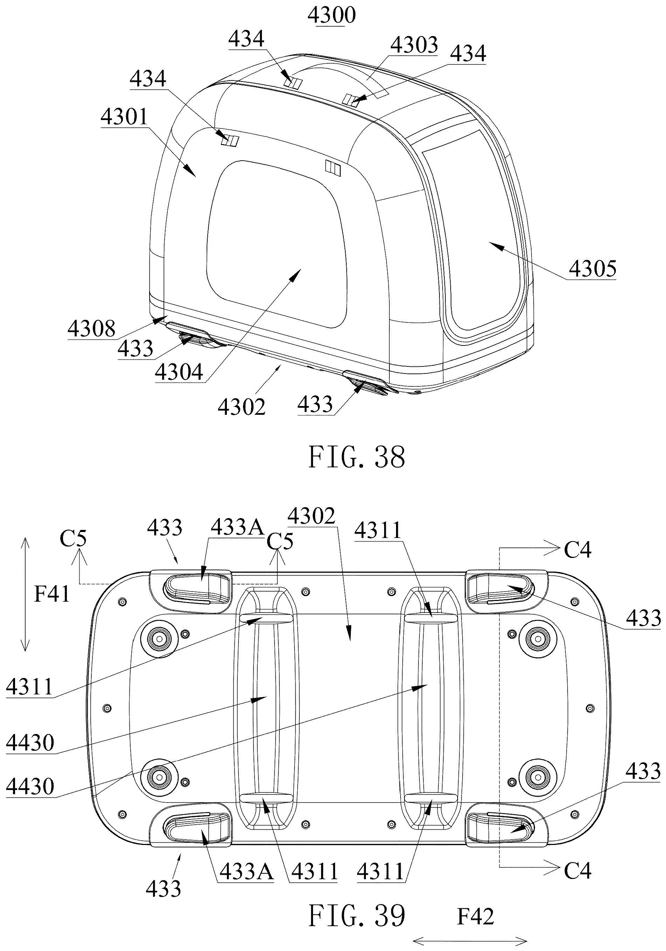

As shown in FIG. 39 and FIG. 30, a fixing strap assembly 3300 may also be configured to secure the carrier 3110 to the vehicle. Specifically, the fixing strap assembly 3300 includes, for example, a restraining strap assembly 3310 and an extending component 3320. The restraining strap assembly 3310 has a first connecting end 3312 and at least one second connecting end. The first connecting end 3312 and the at least second connecting end (not shown) may be connected to each other by one or more restraining straps 3311 (also referred to as a "strap body"). Each second connecting end is provided with a connector configured to be detachably connected to a corresponding connector on the vehicle seat. In an example, the restraining strap 3311 may be an elastic webbing strap. In this embodiment, the restraining strap assembly 3310 has two second connecting ends (obstructed by the box body 3110 in FIG. 30, not shown), and the two second connecting ends are connected by a single restraining strap 3311. Optionally, the first connecting end 3312 may have a hole 3314 through which the restraining strap may pass, and the hole 3314 slidably fits with the restraining strap 3311, so that the position of the first connecting end 3312 on the restraining strap 3311 is adjustable. Optionally, the outward periphery on each of the two sides of the bottom support member 3112 of the box body 3110 in this embodiment is provided with two connecting parts 31121. The restraining straps 3311 (i.e., strap segments of the restraining strap 3311 on two sides of the first connecting end 3312) of the restraining strap assembly 3310 passes through and are secured to the two connecting parts 31121 on the same side, and the second connecting ends located at both ends of the restraining straps 3311 (each at an end of each of the two strap segments) are respectively connected by connectors to corresponding connectors on the vehicle seat, e.g., ISOFIX interfaces.

The extending component 3320 includes an extending strap 3321 (also referred to as a "strap body"), an adjusting part 3322, and a third connecting end 3323 and a fourth connecting end 3324 respectively located at two ends of the extending strap 3321. The third connecting end 3323 may be detachably connected to the first connecting end 3312 of the restraining strap assembly 3310. The fourth connecting end 3324 is provided with a connecting device, e.g., a buckle, a hook, or a LATCH fastener, or the like, that is engaged with a corresponding connection structure in the vehicle. The adjusting part 3322 is disposed on the extending strap 3321 to adjust an available length of the extending strap 7521 between the third connecting end 3323 and the fourth connecting end 3324. In an example, the extending strap may be a webbing strap.

When the carrier is to be secured to the vehicle seat, as shown in an assembly diagram of FIG. 30, after the box body 3110 of the carrier is placed on the vehicle seat, an end of the fixing strap assembly 3300 (e.g., the fourth connecting end 3324 of the extending component 3320) is connected to a corresponding interface (e.g., a Top Tether interface) of the vehicle seat by the connecting device, and another end of the fixing strap assembly 3300 ( e.g., the second connecting end of the restraining strap assembly 3310) passes through the carrying handle 3115 disposed on the top side of the box body 3110 and around the front side of the box body 3110, and then is connected to another corresponding interface (e.g., an ISOFIX interface or a LATCH interface) of the vehicle seat through the bottom part of the box body 3110, thereby further restricting lateral sliding, tilting, and the like of the box body 3110 of the carrier to more stably secure the carrier.

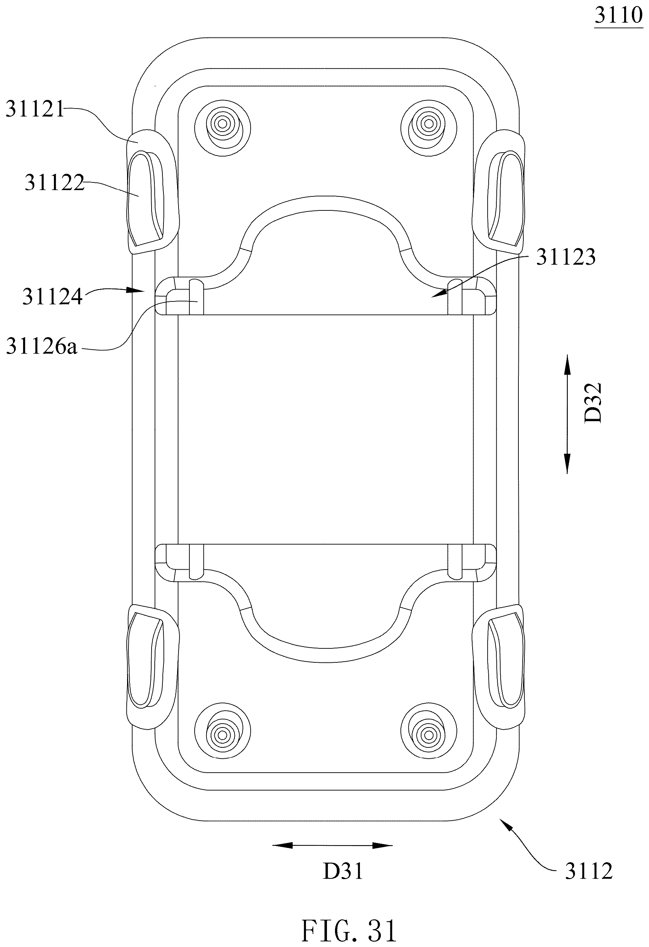

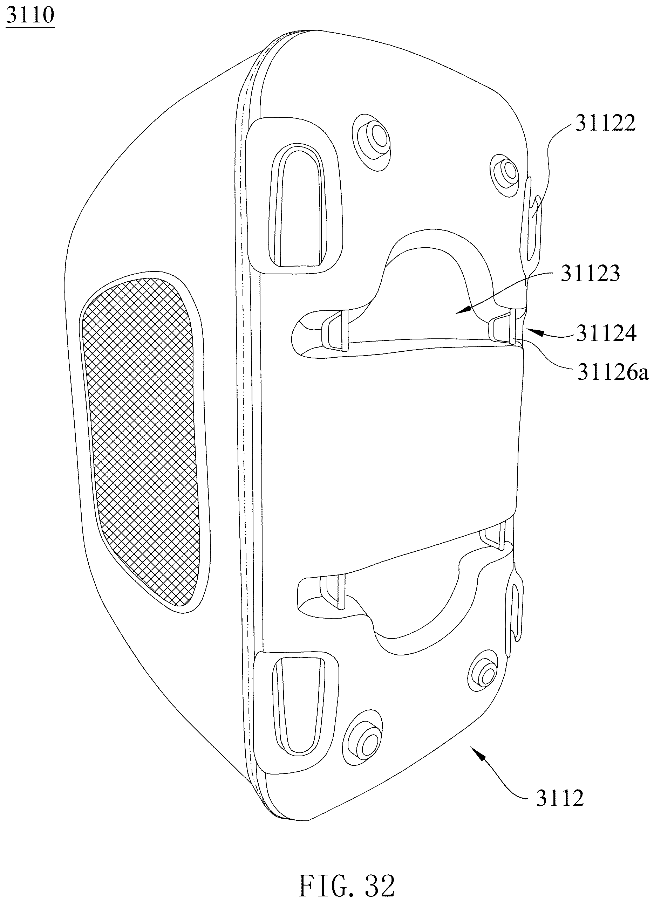

In addition, FIGS. 31 and 32 respectively show a bottom support member 3112 according to an embodiment of the second aspect of the present disclosure.

As can be seen in conjunction with FIGS. 30 to 32, the connecting parts 31121 of the bottom support member 3112 may be further provided with strap guiding mechanisms 31122, configured to guide the restraining strap 3311 of the fixing strap assembly 3300. The restraining strap 3311 of the fixing strap assembly 3300 passes through corresponding strap guiding mechanisms 31122 and is bonded with a plurality of positions of the carrier (e.g., the box body 3110 of this embodiment), so as to more efficiently prevent the box body 3110 from sliding left and right on the vehicle seat. In this embodiment, four strap guiding mechanisms 31122 may be provided, respectively disposed at connecting parts 31121 on the two sides of the bottom support member 3112. In an example, the strap guiding mechanisms 31122 may be clamping members, locking members, etc., which are configured to allow the restraining straps 3311 to pass therethrough and be secured thereon.

In an embodiment, two grooves 31123 extending along a width direction (a first direction D31) of the box body 3110 may also be provided below the bottom support member 3112, and the two grooves 31123 are spaced apart by a predetermined distance in a length direction (a second direction D32) of the box body 3110. Cross-sections of the grooves 31123 may be rectangular, or semi-circular, or a combination of rectangular and semi-circular (as shown in FIG. 31), but the present disclosure is not limited thereto. The cross-sections of the grooves 31123 may also have other single shapes, or combinations of multiple shapes. In addition, an engaging part 3112 may be provided under the bottom support member 3112, which is configured to lock the carrier (e.g., the box body 3110 of this embodiment) to a fixing device fitting with the vehicle, or to lock the carrier to another moving device. Specifically, as in FIGS. 31 and 32, four engaging parts 31124 may be provided, symmetrically disposed in the grooves 31123 along the first direction D31 and the second direction D32, respectively. For example, each of the engaging parts 31124 may have a hook, a snap rod, etc., configured to be engaged with the fixing base assembly or an associated fixing device on the moving device, but the present disclosure is not limited thereto.

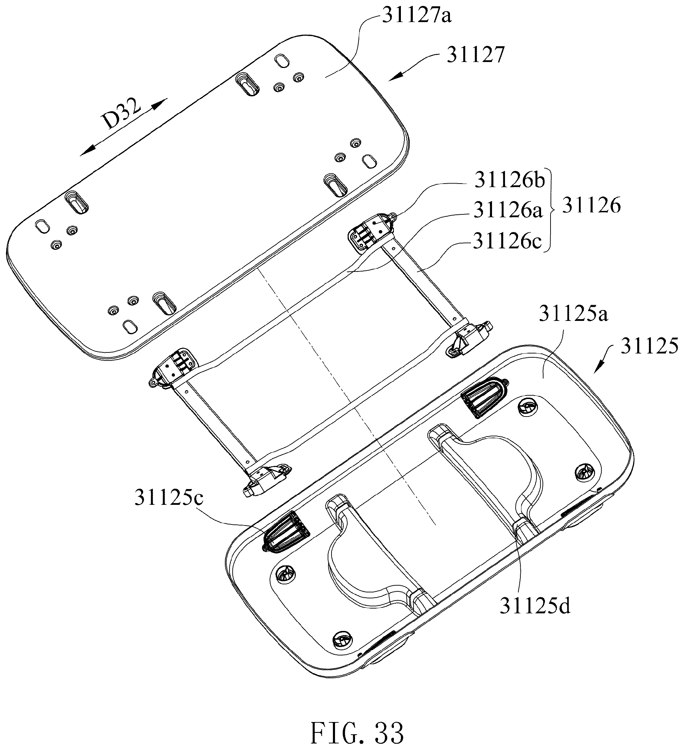

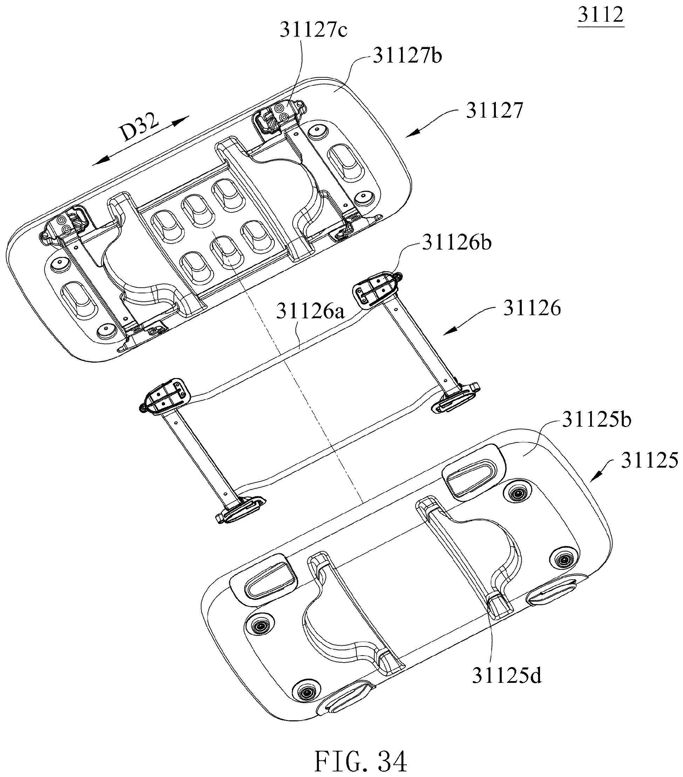

Referring to FIGS. 33 and 34, FIGS. 33 and 34 show exploded perspective views of the bottom support member 3112 of the box body 3110 shown in FIG. 32, respectively. FIG. 33 shows an exploded perspective view of the bottom support member 3112 as viewed from above. FIG. 34 shows an exploded perspective view of the bottom support member 3112 as viewed from below.

As shown in FIGS. 33 and 34, the bottom support member 3112 includes a base housing 31125, a fixing bracket 31126, and a support plate 31127. The base housing 31125 is connected to the support plate 31127 to form the appearance of the bottom support member 3112. In other words, an upper surface 31127a of the support plate 31127 forms an upper surface of the bottom support member 3112 located in an accommodating space formed by the body 3111 and the bottom support member 3112, and the base housing 31125 forms the bottom part of the box body 3110, i.e., its lower surface 31125b forms a bottom surface of the box body 3110.

Further, in conjunction with FIGS. 32 to 34, the four strap guiding mechanisms 31122 configured to guide the restraining straps 3311 (see FIG. 25) may be disposed on the base housing 31125, e.g., symmetrically disposed in pairs on the bottom part of the bottom support member 3112, more specifically on the lower surface 31125b of the base housing 31125. Each of the strap guiding mechanisms 31122 may be formed separately and secured to the base housing 31125 by a fastener, or may be integrally formed with the base housing 31125.

As shown in FIGS. 32 and 33, the fixing bracket 31126 is provided between the base housing 31125 and the support plate 31127, for example, secured between the upper surface 31125a of the base housing 31125 and the lower surface 31127b of the support plate 31127, i.e., in the interior of the bottom support member 3112. Specifically, the fixing bracket 31126 may include an engaging member 31126a and a fixing base 31126b. At least a part of the engaging member 31126a is exposed outside the bottom support member 3112 (i.e., visible from the bottom part of the bottom support member 3112) through the engaging gap 31125d on the base housing 31125 to form the engaging part 31124 (see FIGS. 31 and 32), which is configured to lock the carrier to the fixing base assembly (not shown) or an associated fixing device on the moving device. In an example, the fixing bracket includes two engaging members 31126a in rod shape, and the two engaging members 31126a are symmetrically disposed and respectively extend along the length direction (the second direction D32) of the box body 3110. Accordingly, four engaging gaps 31125d are formed on the base housing 31125 to form four engaging parts 31124 at the bottom part of the bottom support member 3112 (see FIG. 31). Optionally, connecting rods 31126c are provided between corresponding ends of the two engaging members 31126a to form a quadrilateral structure, so as to enhance the stability of the overall structure. Four fixing bases 31126b are respectively disposed at both ends of the two engaging members 31126a to fix the engaging members 31126a between the base housing 31125 and the support plate 31127. Specifically, when the engaging members 31126a are fixed, each of the fixing bases 31126b is located in a space formed by one of first recesses 31125c of the base housing 31125 and a corresponding second recess 31127c disposed on the support plate 31127 and fixedly connected by, for example, screws.

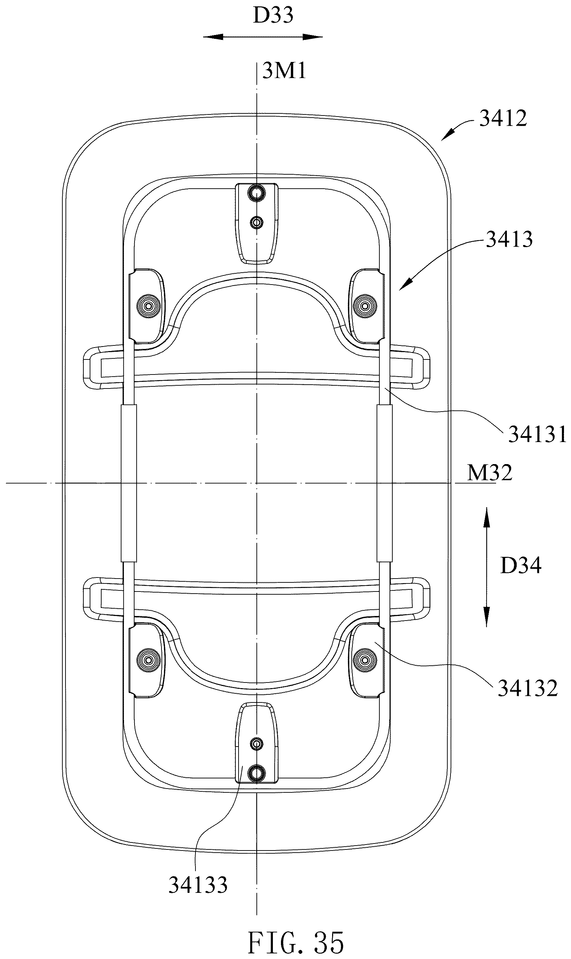

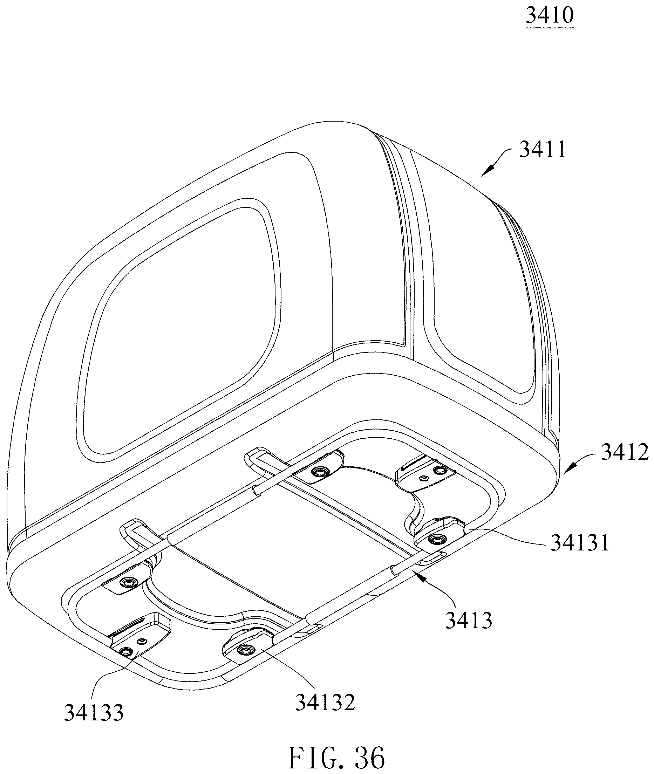

Referring to FIGS. 35 and 36, FIGS. 35 and 36 show a perspective view and a bottom view of a bottom support member 3412 according to another embodiment of the second aspect of the present disclosure, in which another engagement structure of the bottom support member 3412 is shown.

As shown in FIGS. 35 and 36, in another embodiment, the bottom support member 3412 may be provided with a bracket assembly 3413 configured to mount the box body 3410 of the carrier to a fixing base assembly (not shown) or an associated fixing device on a moving device. The bracket assembly 3413 includes an engaging member 34131, which is engaged with a corresponding engagement structure disposed on the moving device. In an example, the engaging member 34131 may be configured as an annular structural member, and arranged to be spaced from a bottom part (i.e., a bottom surface) of the bottom support member 3412. A center of the engaging member 34131 corresponds generally to a center of the box body 3410 in both a width direction of the box body 3410 (the first direction D33) and a length direction of the box body 3410 (the second direction D34). The bracket assembly 3413 may further include four first connecting brackets 34132 disposed on the engaging member 34131 to be connected to the bottom part of the box body 3410, such that the engaging member 34131 is spaced apart from the bottom support member 3412. These first connecting brackets 34132 are spaced apart from each other by a certain distance, such as respectively disposed at four corners of the engaging member 34131, so as to provide a balanced and stable support for the box body 3410. However, it should be understood that the engaging member of the present disclosure is not limited to the above-mentioned shape, and the first connecting bracket 34132 is not limited to the above-mentioned quantity or positions. Optionally or alternatively, the engaging member 34131 may be configured as two rod members disposed parallel to each other. Optionally or alternatively, only two first connecting brackets 34132 may be provided, and the two first connecting brackets 34132 are disposed diagonally. In other examples, the number of the first connecting brackets 34132 may also be three, five, etc.

Additionally, the bracket assembly 3413 may be further provided with a strap guiding mechanism 34133, which is configured to guide and/or restrain a restraining strap (not shown in FIG. 36, see FIG. 30) of a fixing strap assembly to pass therethrough. As shown in FIG. 35, two strap guiding mechanisms 34133 may be provided, which are disposed on the bottom part of the bottom support member 3412. In an example, the two strap guiding mechanisms 34133 may be disposed between the engaging member 34131 and the bottom surface of the bottom support member 3412, respectively. Optionally, the two strap guiding mechanisms 34133 may be located at a centerline M1 in the width direction of the box body 3410 (the first direction D33), and further, symmetrically disposed with respect to the box body 3410 along a centerline M32 in a length direction thereof (the second direction D34). By this configuration, regardless of an orientation in which the carrier is secured to the vehicle seat or the moving device (e.g., forward or rearward), threading paths of the restraining straps through the strap guiding mechanisms 34133 are the same, thereby avoiding misthreading and misuse. Specifically, the strap guiding mechanisms 34133 may be clamping members, locking members, etc., which are configured to allow the restraining strap to pass therethrough and be secured thereon. Furthermore, although not shown in the drawings, it should be understood that the carrier according to the present disclosure may be provided with both of the strap guiding mechanisms 31122 and 34133.

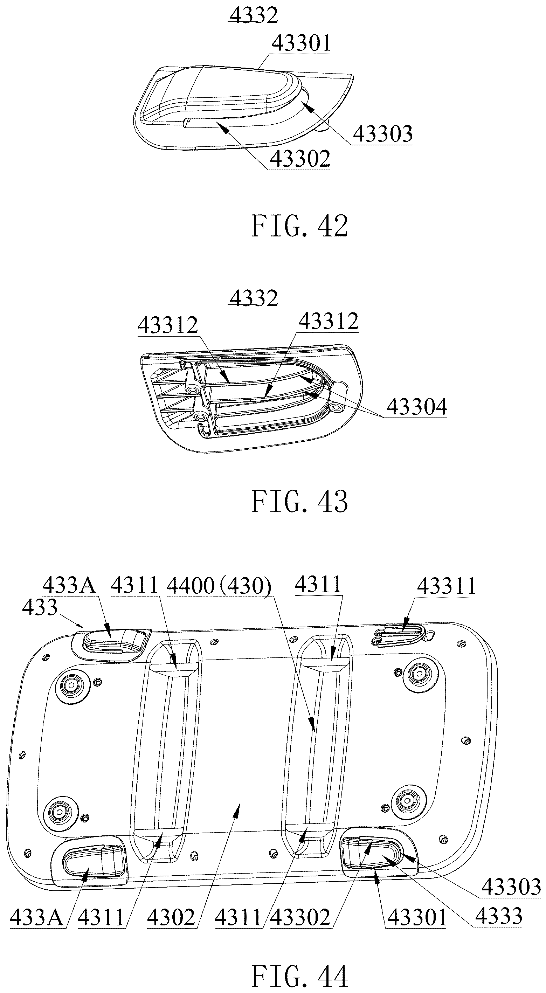

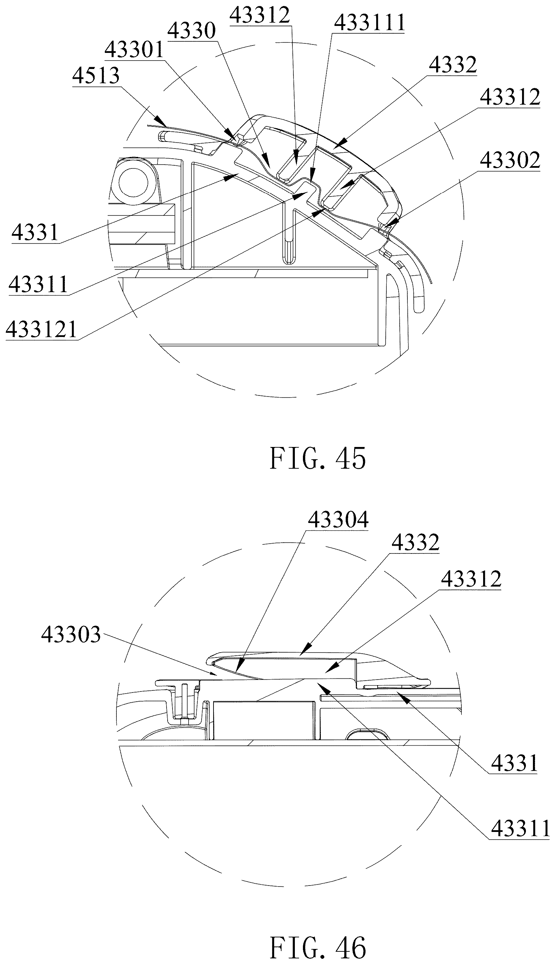

It should be noted that the specific structure of the strap guiding mechanisms 31122 and 34133 may be referred to a strap guiding structure 433 described below in conjunction with FIGS. 42 to 52, which will not be repeated herein, and the present disclosure is not limited to this structure. In addition, the embodiments of the first aspect and the embodiments of the second aspect in the present disclosure may be implemented either singly or in combination. For example, the body of the box body according to any one of the embodiments of the first aspect may be used in combination with the bottom support member according to any one of the embodiments of the second aspect, and the carrier according to any one of the embodiments of both the first aspect and the second aspect may be provided with the strap guiding mechanism 31122 and/or 34133 under conditions of structural compatibility.

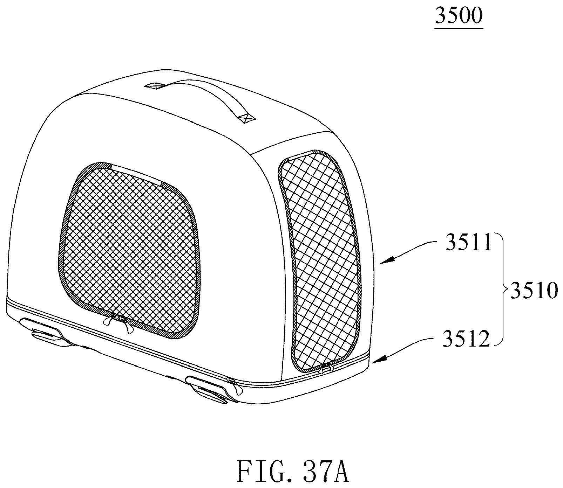

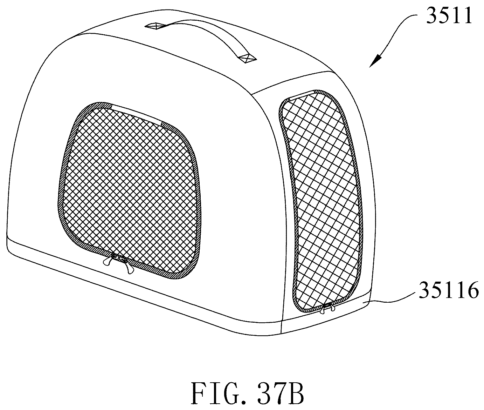

Referring to FIGS. 37A to 37C, FIG. 37A shows a carrier 3500 according to a third embodiment of the second aspect of the present disclosure, and FIGS. 37B and 37C respectively show two parts of the carrier 3500 after the carrier 3500 is disassembled. Specifically, the box body 3510 may include a body 3511 and a bottom support member 3512. The body 3511 is detachably covered on the bottom support member 3512 to form an accommodating space for a pet to sit therein. In an example, the body 3511 is of monolithic structure, i.e., a first support member (such as a side support member) and a second support member (such as a top support member) of the body 3511 are fixedly connected to each other, or formed integrally. Optionally, each of the first support member and the second support member of the body 3511 is made of a rigid material to better maintain the shape of the box body, and are not foldable. The body 3511 and the bottom support member 3512 are detachably connected by at least one connection assembly. For example, at least one connection assembly includes a first connecting member 35116 and a second connecting member 35117 detachably connected to each other. The first connecting member 35116 is disposed on the body 3511 and the second connecting member 35117 is disposed on the bottom support member 3512. Specifically, the first connecting member 35116 and the second connecting member 35117 are mutually engaged zippers, but the present disclosure is not limited thereto. For example, they may also be mutually engaged snap-fit structures, sliding buckle structures, hook and loop fasteners, hooks and loops, etc., and optionally, a flexible connection is adopted. It should be noted that the carrier 3500 may also be provided with a window and/or a window covering and/or an impact resistant material, etc., as those of the carrier in the aforementioned embodiments, which are not described herein. In another example, the body 3511 may also have a structure similar to that of any one of embodiments or a combination of embodiments of the first aspect and/or the second aspect above, which is not described herein.

In another example, the body 3511 of the box body 3510 and the bottom support member 3512 may also be fixedly connected, e.g., non-detachably connected, i.e., the box body 3510 may be of a one-piece construction, and optionally, without affecting the overall structure of the carrier, the box body 3510 may be provided with a structure such as that in any one of the aforementioned embodiments, which is not be repeated herein.

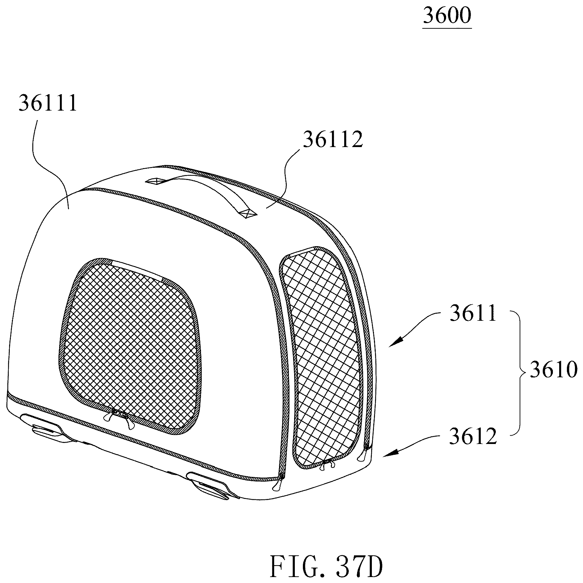

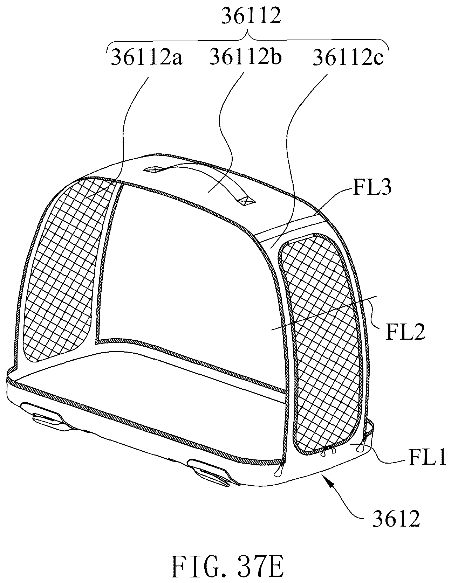

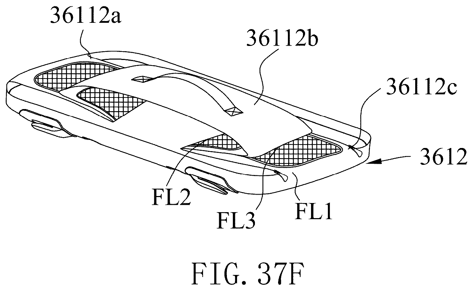

In addition, with reference to FIGS. 37D to 37F, FIG. 37D shows a carrier 3600 according to a fourth embodiment of the second aspect of the present disclosure, and FIGS. 37E and 37F show different states of the box body 3611 after the side support member 36111 is disassembled, respectively.

Specifically, the box body 3610 includes a body 3611 and a bottom support member 3612. The body 3611 is at least partially detachably covered on the bottom support member 3612 to form an accommodating space for a pet to sit therein. The body 3611 includes a first support member and a second support member detachably connected to each other, e.g., the side support member 36111 as the first support member and the upper support member 36112 as the second support member shown in FIG. 37D. In an example, referring to FIGS. 37D and 37E, each of two ends of the upper support member 36112 is connected to the bottom support member 3612, and the side support member 36111 is detachably connected between the upper support member 36112 and the bottom support member 3612. In a specific example, as shown in FIG. 37D, the side support member 36111 may include two sub-support members, which are disposed on two sides of the upper support member 36112 and form two side surfaces of the body 3611, respectively.

As shown in FIGS. 37E and 37F, the upper support member 36112 has three sheet-like members (i.e., a first sheet-like member 36112a, a second sheet-like member 36112b, and a third sheet-like member 36112c) connected to each other. The second sheet-like member 36112b forms a top surface of the body 3611 (the second sheet-like member 36112b may also be referred to as an "upper sheet-like member"), and the first member 36112a and the third member 36112c are capable of being folded and forming the other two side surfaces of the body 3611 (i.e., the first member 36112a and the third member 36112c may also be referred to as the "side sheet-like members," and are located between two side surfaces formed by the two sub-support members). Optionally, each of the first sheet-like member 36112a and the third sheet-like member 36112c have an end connected to the second sheet-like member 36112b, and the other end of each of the first sheet-like member 36112a and the third sheet-like member 36112c (i.e., the end that is remote from the second sheet-like member 36112b) is fixedly connected to the bottom support member 3612.

In conjunction with FIGS. 37D to 37F, when the box body 3610 is to be folded, the user only needs to remove the two side support members 36111, at which time both ends of the upper support member 36112 remain connected to the bottom support member 3612. Then, the user can press the upper sheet-like member 36112b of the upper support member 36112 to cause the side sheet-like members 36112a, 36112c to be folded downwardly onto the bottom support member 3612, thereby reducing the volume of the box body 3610 when folded. Specifically, as shown in FIGS. 37E and 37F, the upper support member 36112 may be folded over the bottom support member 3612 by a plurality of folding parts on the side sheet-like members 36112a, 36112c. In this example, each of the two side sheet-like members 36112a, 36112c of the upper support member 36112 have three folding parts FL1, FL2, FL3, such that both ends of the upper support member 36112 are folded over the bottom support member 3612 in a Z-shaped manner. Specifically, the folding part FL1 may be located at or proximate to a connection of the upper support member 36112 (specifically, the side sheet-like member 36112a, 36112c thereof) with the bottom support member 3612 (i.e., an edge thereof), the folding part FL2 may be located on the side sheet-like member 36112a, 36112c, and the folding part FL3 may be located at a connection between the upper sheet-like member 36112b (i.e., an edge thereof) of the upper support member 36112 and the side sheet-like members 36112a, 36112c. In an example, the upper support member 36112 and the bottom support member 3612 may be connected and/or each of the sheet-like members of the upper support member 36112 may be connected by flexible connection means, e.g., a flexible material such as a fabric, to form one body.

The third aspect of the present disclosure also provides a carrier 4300 capable of being mounted on a vehicle seat and/or a wheeled moving device, and a strap guiding mechanism 433 disposed on the carrier 4300.

FIG. 38 shows a perspective view of the carrier 4300 according to a first embodiment of the third aspect of the present disclosure. The carrier 4300 is, for example, a box structure, such as a pet box for accommodating a pet. The carrier 4300 includes, for example, a body 4301 and a bottom support member 4308. The bottom part of the bottom support member 4308 is a bottom part 4302 of the carrier 4300, and the bottom support member 4308 is connected to a frame of a wheeled moving device (such as the wheeled moving device of the aforementioned first aspect). Referring to a bottom view shown in FIG. 39, the bottom part 4302 of the carrier 4300 includes four engaging members 4311, and the four engaging members 4311 are arranged in two rows and two columns. In this embodiment, the rows are oriented in the same direction as a left-right direction (a first direction F41, i.e., a width direction), and the columns are oriented in the same direction as a front-rear direction (a second direction F42, i.e., a length direction). That is, the four engaging members 4311 are symmetrically disposed in both the first direction F41 and the second direction F42. Two engaging members 4311 in the same row are spaced apart from each other in the left-right direction (the first direction F41) and are substantially in the same position in the front-rear direction (the second direction F42). The two engaging members 4311 in the same column are spaced apart from each other in the front-rear direction (the second direction F42), and are substantially in the same position in the left-right direction (first direction F41). In some embodiments, the bottom part 4302 of the carrier 4300 is, for example, provided with two third grooves 4430 extending along the left-right direction (the first direction F41), respectively, the two third grooves 4430 are spaced apart by a predetermined distance in the front-rear direction (the second direction F42), and the four engaging members 4311 are located in the two third grooves 4430. The bottom part 4302 of the carrier 4300 has, for example, a structure with both front-rear symmetry and left-right symmetry. In some embodiments, the bottom part 4302 of the carrier 4300 has two parallel rods (for example, two opposite rods of an annular structure), which extend in the front-rear direction and pass through the two third grooves 4430 in sequence, and parts of the two rods located in the third grooves 4430 form four engaging members 4311. In some alternative embodiments, the bottom part 4302 of the carrier 4300 may have four independent rods, and the four independent rods respectively pass through the two third grooves 4430 to form four engaging members 4311.

The body 4301 and the bottom support member 4308 may be non-detachably connected or detachably connected by a structure such as a zipper, and the body 4301 may have a carrying handle 4303, an observation window 4304, a ventilation opening 4305 (e.g., the window provided on the side surface of the box body as described in the first and second aspects above), etc. The body 4301 may be opened by a zipper structure to facilitate access to a pet.

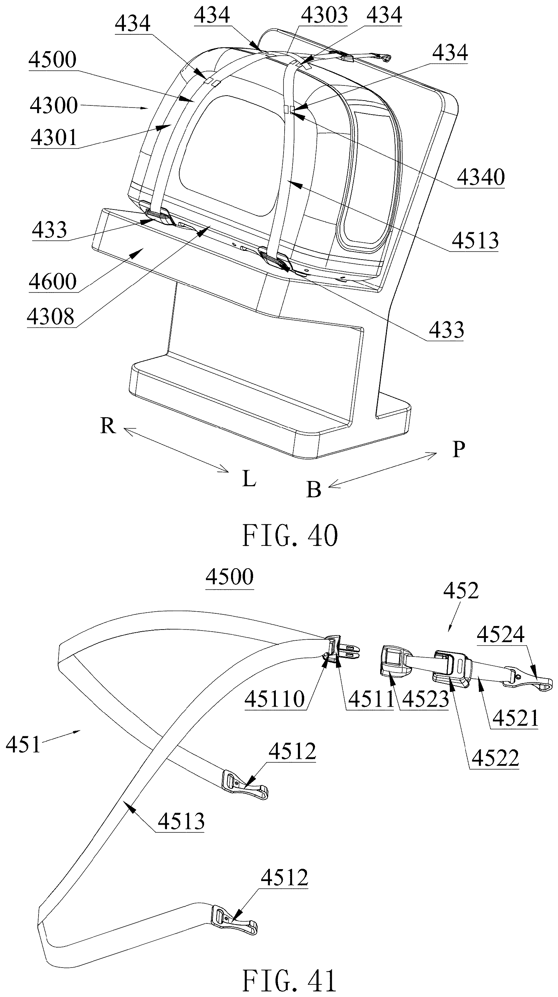

Referring to FIG. 40, the carrier 4300 may be secured to an engaging part of a wheeled moving device by the engaging member 4311 and may be secured to a vehicle seat 4600 by a fixing strap assembly 4500 after removal from the wheeled moving device. FIG. 41 shows an exemplary structure of the fixing strap assembly 4500. The fixing strap assembly 4500 includes, for example, a restraining strap assembly 451 and an extending component 452.

The restraining strap assembly 451 includes, for example, a first connecting end 4511 and at least one second connecting end 4512. The first connecting end 4511 and each second connecting end 4512 may be connected by a plurality of restraining straps, and the restraining straps may be elastic webbing straps. In this embodiment, the restraining strap assembly 451 has two second connecting ends 4512, and the two second connecting ends 4512 are connected by a single restraining strap 4513. In some embodiments, the first connecting end 4511 may have a hole 45110 through which the restraining strap may pass, and the hole 45110 slidably fits with the restraining strap 4513, so that a position of the first connecting end 4511 on the restraining strap 4513 is adjustable. In some embodiments, the second connecting end 4512 is, for example, an ISOFIX insert to be detachably connected to an ISOFIX socket of a vehicle seat. Certainly, the type of the second connecting end 4512 is not limited to the ISOFIX insert, and it may be any suitable type such as a hook, a buckle, etc.

The extending component 452 includes, for example, an extending strap 4521, an adjusting part 4522, a third connecting end 4523, and a fourth connecting end 4524. The extending strap 4521 is, for example, a webbing strap, and the third connecting end 4523 and the fourth connecting end 4524 are respectively connected to the extending strap 4521. The third connecting end 4523 is configured to be detachably connected to the first connecting end 4511 of the restraining strap assembly 451. The third connecting end 4523 and the first connecting end 4511 may be any suitable structures such as buckles or hooks that fit with each other. The fourth connecting end 4524 is configured to be detachably connected to a suitable structure in the vehicle (e.g., a connection structure on a top of a vehicle seat, or a connection structure on a rear side of a backrest of the vehicle seat 4600) to secure the carrier 4300 to the vehicle seat 4600. The fourth connecting end 4524 may be any suitable type, such as a hook, a buckle, etc. The adjusting part 4522 is disposed on the extending strap 4521 to adjust an available length of the extending strap 4521 between the third connecting end 4523 and the fourth connecting end 4524.

In practice, the fourth connecting end 4524 of the extending component 452 may remain connected to the suitable structure in the vehicle, and a connection position of the first connecting end 4511 and the third connecting end 4523 is located in a place that is easily accessible to the user, such as the top or a front side of the backrest of the vehicle seat. This allows the user to easily secure the carrier 4300 to or remove it from the vehicle seat by conveniently manipulating the connection or separation of the first connecting end 4511 and the third connecting end 4523.

Referring again to FIGS. 38 and 39, at least one strap guiding mechanism may be disposed at least one of a bottom part, a side part and a top part of the carrier 4300, and the strap guiding mechanism is configured to guide the webbing strap of the fixing strap assembly 4500, and to allow the restraining strap and/or extending strap of the fixing strap assembly 4500 to be bonded to multiple positions of the carrier 4300, so as to effectively prevent the carrier 4300 from sliding left and right on the vehicle seat 4600. In an example, the strap guiding mechanisms 433 may be symmetrically disposed at a bottom edge of the carrier, for example, four strap guiding mechanisms 433 are provided and disposed at positions of the strap guiding mechanisms 31122 as shown in FIG. 31, but neither the number nor the positions of the strap guiding mechanisms of the present disclosure is limited thereto.

FIGS. 42 to 46 show an exemplary embodiment of a strap guiding mechanism 433. A shell 433A of the strap guiding mechanism 433 may include a bottom shell 4331 and a top shell 4332. The bottom shell 4331 is formed by, for example, a shell of the bottom part 4302 of the carrier 4300. The top shell 4332 is mounted on the bottom shell 4331 by a fastener not shown in the drawings. The bottom shell 4331 and the top shell 4332 define a channel 4330 through which the webbing strap of the fixing strap assembly 4500 (more specifically, the restraining strap 4513) may pass, and the channel 4330 has a first port 43301 and a second port 43302. When the fixing strap assembly 4500 secures the carrier 4300 to the vehicle seat 4600, the restraining strap 4513 passes through the first port 43301 and the second port 43302. Referring to FIG. 42, in this embodiment, the first port 43301 and the second port 43302 are both disposed on the top shell 4332. In some alternative embodiments, the first port 43301 and the second port 43302 are defined, for example, jointly by the bottom shell 4331 and the top shell 4332.

Referring to FIGS. 43 to 45, at least one first convex rib 43311 protruding toward the top shell 4332 is disposed on the bottom shell 4331, and at least one second convex rib 43312 protruding toward the bottom shell 4331 is disposed on the top shell 4332. The first convex rib 43311 and the second convex rib 43312 are alternately arranged in a length direction of the restraining strap 4513. That is, the first convex rib 43311 and the second convex rib 43312 are arranged on the side walls opposite to each other in the channel 4330. By reasonably setting the heights of the first convex rib 43311 and the second convex rib 43312, the restraining strap 4513 located between the first port 43301 and the second port 43302 is bent in the channel 4330 to pass around a top end 433111 of the first convex rib 43311 and a top end 433121 of the second convex rib 43312, so that the restraining strap 4513 is subjected to movement resistance from the first convex rib 43311 and the second convex rib 43312. In this way, when the fixing strap assembly 4500 is tightened, the restraining strap 4513 is less likely to slip relative to the carrier 4300.

Referring to FIGS. 42, 44 and 46, in some embodiments, the channel 4330 further has a side introduction port 43303, the side introduction port 43303 is located on the same side of the first port 43301 and the second port 43302, and the side introduction port 43303 has a sloped wall 43304. By providing the side introduction port 43303 and the sloped wall 43304, the restraining strap 4513 can be easily slid laterally into the channel 4330.

Further referring to FIG. 40, an exemplary embodiment of a strap guiding mechanism 434 is further shown. The strap guiding mechanism 434 is, for example, a C-shaped structure with an opening 4340. The strap guiding mechanism 434 may be disposed on at least one of the bottom part, the side part, and the top part of the carrier 4300. The restraining strap 4513 may be engaged in an accommodating space of the C-shaped structure, and the C-shaped structure limits the relative movement between the restraining strap 4513 and the carrier 4300 in a left-right direction of the vehicle seat 4600, so that the carrier 4300 is stably secured to the vehicle seat 4600. In some alternative embodiments, the strap guiding mechanism 434 may be, for example, a belt loop or any other suitable structure as long as the relative positional relationship between the restraining strap 4513 and the carrier 4300 can be maintained. In some embodiments, the restraining strap 4513 passes through both the strap guiding mechanism 434 and the carrying handle 4303 at the top part of the carrier 4300.

It should be noted that, unless otherwise clearly specified and limited, the terms regarding directions such as "front", "rear", "left", and "right" of the vehicle seat in the embodiments of the present disclosure are based on the "front", "rear", "left", and "right" directions of a normally traveling vehicle. The drawings schematically show the "front" and "rear" directions with arrows B and P, and schematically show the "left" and "right" directions with arrows L and R. These terms regarding directions are used only to make the description of embodiments of the present disclosure clearer and are not intended to unduly limit the scope of protection of the present disclosure.

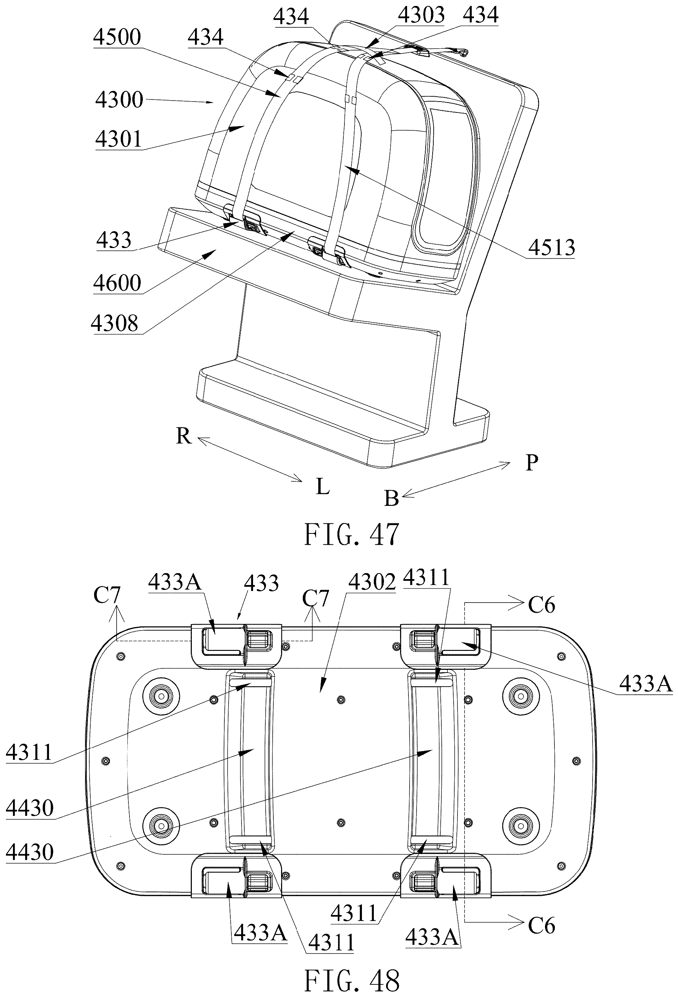

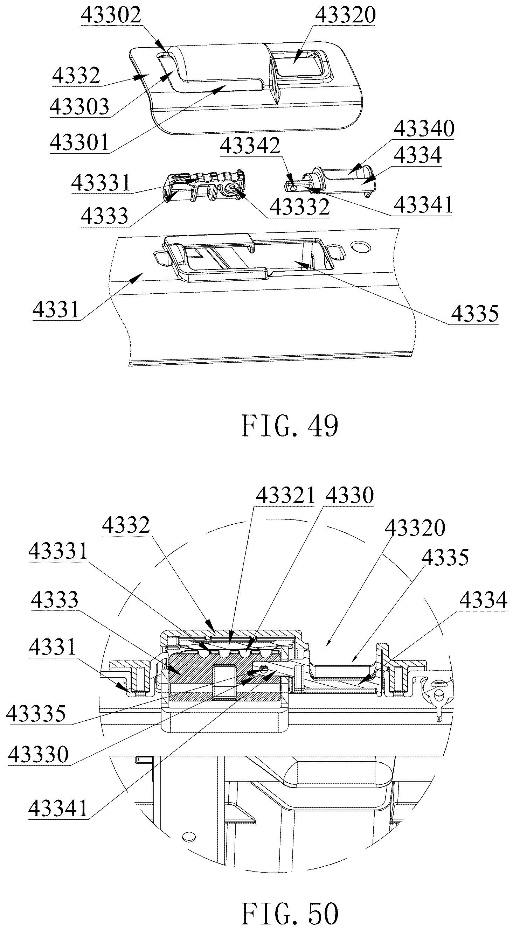

FIGS. 47 to 52 show an exemplary embodiment of a strap guiding mechanism 433 of a second embodiment of a fourth aspect of the present disclosure. A shell 433A of the strap guiding mechanism 433 may include a bottom shell 4331 and a top shell 4332. The bottom shell 4331 is formed by, for example, a shell of the bottom part 4302 of the carrier 4300. The top shell 4332 is mounted on the bottom shell 4331 by a fastener not shown in the drawings. The bottom shell 4331 and the top shell 4332 define a channel 4330 through which the webbing strap of the fixing strap assembly 4500 (more specifically, the restraining strap 4513) may pass. The channel 4330 has a first port 43301 and a second port 43302. The restraining strap 4513 passes through the first port 43301 and the second port 43302. Referring to FIG. 49, in this embodiment, the first port 43301 and the second port 43302 are both disposed on the top shell 4332. In some alternative embodiments, the first port 43301 and the second port 43302 are, for example, jointly defined by the bottom shell 4331 and the top shell 4332.

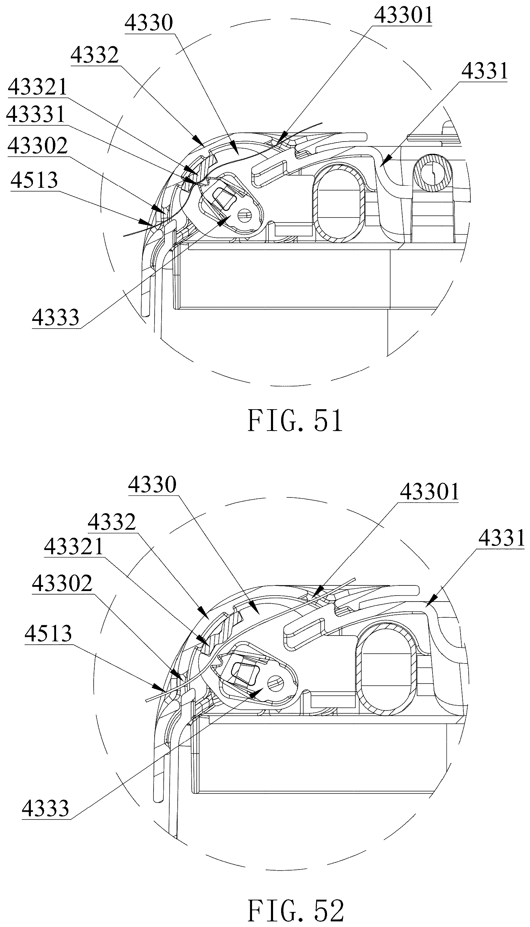

Referring to FIGS. 51 and 52, the strap guiding mechanism 433 further includes a cam 4333 disposed in the channel 4330. The cam 4333 has a working position and a disabled position. Referring to FIG. 51, in the working position, the cam 4333 presses the restraining strap 4513 against the top shell 4332 (the side wall of the channel 4330) of the shell 433A, so that the restraining strap 4513 cannot move relative to the strap guiding mechanism 433. In some embodiments, the top shell 4332 is provided with a reinforcing member 43321 located in the channel 4330, and the reinforcing member 43321 may be made of a material with a high coefficient of friction and sturdy structural properties. When the cam 4333 is in the working position, the restraining strap 4513 is clamped between the cam 4333 and the reinforcing member 43321. Referring to FIG. 52, in the disabled position, the cam 4333 releases pressing on the restraining strap 4513, and the restraining strap 4513 may move freely relative to the strap guiding mechanism 433.

Referring to FIGS. 48 to 50, in order to facilitate changing the position of the cam 4333, the strap guiding mechanism 433 may further include an adjusting button 4334, which is connected to the cam 4333 to drive the cam 4333 to rotate between the working position and the disabled position. In some embodiments, the cam 4333 has a hole 43330 and the adjusting button 4334 has a connecting shaft 43341, which is configured to be inserted into the hole 43330 and fit with the hole 43330 in a non-rotatable manner. a hole 43342 of the connecting shaft 43341 is connected to a hole 43332 of the cam 4333 by a fastener 43335 (see FIG. 50). In some embodiments, the bottom shell 4331 of the shell 433A defines a mounting cavity 4335 adjacent to the channel 4330, the adjusting button 4334 is mounted in the mounting cavity 4335, and the top shell 4332 of the shell 433A defines an operating port 43320 for operating the adjusting button 4334. The user may adjust the cam 4333 to the working position or the disabled position by turning the adjusting button 4334 through the operating port 43320. Referring to FIG. 49, the adjusting button 4334 has, for example, a concave part 43340 to facilitate the user to apply force to the adjusting button 4334.

Referring to FIG. 49, in some embodiments, the cam 4333 has a plurality of teeth 43331 for pressing the restraining strap 4513, and the teeth 43331 are capable of catching the restraining strap 4513, making the restraining strap 4513 less likely to slip relative to the strap guiding mechanism 433. Referring to FIG. 42 and FIG. 44, the strap guiding mechanism 433 may also be configured with a side introduction port 43303 as described in the previous embodiments.

It should be noted that although a plurality of embodiments are described in the first aspect to the third aspect of the present disclosure, respectively, these embodiments may be implemented in combination with each other, i.e., one or more structures in an embodiment may be used in another embodiment, in the absence of a structural conflict. For example, a box body according to any embodiment of the present disclosure may be provided with a bracket assembly, an impact resistant material, a window covering and/or a strap guiding mechanism, etc., which will not be repeated in the present disclosure.

As described above, the present disclosure provides a carrier. The carrier includes a box body. The box body includes a body and a bottom support member. The body is detachably covered on the bottom support member. The body includes a first support member and a second support member. One part of the first support member is non-detachably connected to the second support member and the other part of the first support member is detachably connected by at least one connection assembly to the second support member.

In an embodiment, the at least one connection assembly includes a connecting member disposed on the first support member and a further connecting member correspondingly disposed on the second support member, and the connecting member and the further connecting member respectively have a flexible structure.

In an embodiment, after the other part of the first support member is separated from the second support member, the first support member and the second support member are capable of being folded relative to each other.

In an embodiment, the first support member is a side support member and forms two side surfaces of the body. The second support member is an upper support member and forms a top surface and at least a part of the other two side surfaces of the body.

In an embodiment, the upper support member includes a first sheet-like member, a second sheet-like member and a third sheet-like member, and each of the first sheet-like member and the third sheet-like member has a flexible structure.

In an embodiment, after the other part of the side support member is separated from the upper support member, the upper support member is capable of being folded by the flexible structures of the first sheet-like member and the third sheet-like member relative to the side support member and stowed in the side support member.

In an embodiment, the side support member includes a first sub-support member and a second sub-support member, each has a bottom edge extending substantially horizontally and a top edge in an arched shape. The first sub-support member and the second sub-support member are integrally formed with a connecting piece to form the side support member, such that the bottom edges of the first sub-support member and the second sub-support member form a bottom edge of the body together with a bottom edge of the connecting piece, and the bottom edge of the body is detachably connected to the bottom support member.

In an embodiment, a part of the first sub-support member and a part of the second sub-support member are non-detachably connected to the upper support member, respectively. The other part of the first sub-support member and the other part of the second sub-support member are detachably connected to the upper support member by at least one second connection assembly, respectively.

In an embodiment, the at least one connection assembly includes a connecting member disposed at a top edge of the first sub-support member or the second sub-support member and extending along a part of the top edge, and a further connecting member disposed at a side edge of the upper support member and extending along a part of the side edge. The connecting member and the further connecting member are disposed in correspondence with each other and detachably connected to each other, such that the other part of the first sub-support member and the other part of the second sub-support member are detachably connected to two side edges of the upper support member, respectively.

In an embodiment, the connecting piece has a flexible structure such that the first sub-support member and the second sub-support member are capable of approaching each other to be folded after the other part of the first sub-support member and the other part of the second sub-support member are separated from the upper support member.

The present disclosure further provides a carrier. The carrier includes: a box body including a body and a bottom support member, where the body is detachably covered on the bottom support member; and a bracket assembly configured to secure the carrier to a moving device, and the box body is placed on the bracket assembly by the bottom support member.

In an embodiment, the body 1111 is detachably connected to the bottom support member by at least one connection assembly.

In an embodiment, the at least one connection assembly includes a first connecting member and a second connecting member detachably connected to each other, the first connecting member is disposed on the body, and the second connecting member is disposed on the bottom support member.

In an embodiment, the body is formed by the first support member and the second support member, and the first support member and the second support member are detachably connected to each other.

In an embodiment, the first support member and the second support member are connected to each other by a zipper.

In an embodiment, after the first support member is separated from the second support member, the first support member and/or the second support member are respectively capable of being changed into the stowed state from the unfolded state by at least one connecting component.

In an embodiment, the first support member is a side support member and at least partially forms two side surfaces of the body. The second support member is an upper support member and forms a top surface and at least a part of the other two side surfaces of the body.

In an embodiment, the upper support member is formed by a first sheet-like member, a second sheet-like member and a third sheet-like member. The first sheet-like member, the second sheet-like member and the third sheet-like member are connected by connecting structures and are capable of being folded relative to each other.

In an embodiment, after the upper support member is separated from the side support member, the upper support member is capable of being changed into a stowed state from an unfolded state by the connecting structures.

In an embodiment, the upper support member is formed as one body by the connecting structure.

In an embodiment, the side support member includes a first sub-support member and a second sub-support member. The first sub-support member and the second sub-support member are independent of each other and each has a bottom edge extending approximately horizontally and an arched-shaped top edge. The bottom edges of the first sub-support member and the second sub-support member are detachably connected to corresponding edges of the bottom support member, respectively, and the top edges of the first sub-support member and the second sub-support member are detachably connected to two sides of the arch-shaped upper support member, respectively.

In an embodiment, the first sub-support member and the second sub-support member are connected to each other by a first connecting member and are detachably connected to the bottom support member. In an embodiment, after the side support member is separated from the upper support member, the first sub-support member and the second sub-support member are capable of being folded relative to each other and the side support member is capable of being changed into a stowed state from an unfolding state.

In an embodiment, the first sub-support member, the second sub-support member and the connecting piece connected between the first sub-support member and the second sub-support member are integrally formed to form the support member. The bottom edges of the first sub-support member and the second sub-support member are integrally connected to the bottom edges of the connecting piece in a peripheral direction, and the top edges of the first sub-support member and the second sub-support member are formed as arches and integrally connected by the top edges of the connecting piece, such that the side support member is detachably connected between the upper support member and the bottom support member.

In an embodiment, after the side support member and the upper support member are completely separated from each other, the first sub-support member and the second sub-support member are capable of being folded relative to each other.

Although relative terms such as "above" and "below" are used in this description to describe the relative relationship of one component to another component in the drawings, these terms are used in this description only for convenience, such as describing the direction of the examples described in the accompanying drawings. It may be understood that if the apparatus identified in the drawings were to be turned upside down, the component described as being "above" would become the component described as being "below". Other relative terms, such as "top", "bottom", "left", "right", etc., also have similar meanings. When a structure is "on" another structure, it may mean that the structure is formed integrally on the other structure, or that the structure is "directly" disposed on the other structure, or that the structure is "indirectly" disposed on the other structure through another structure.

In this description, the terms "a/an", "one", "the", "said" and "at least one" are used to indicate the presence of one or more elements/components/etc.; the terms "comprising", "including" and "having" are intended to indicate open-ended inclusion and mean that there may be further elements/components/etc. in addition to the listed elements/components/etc.; the terms "first", "second", "third", etc. are used merely as markers and not as quantitative limitations on objects thereof.

Unless otherwise limited, all terms used herein, including technical and scientific terms, have the same meaning as those commonly understood by those skilled in the art to which the present disclosure belongs. It should also be understood that terms should be interpreted as having a meaning consistent with their meaning in the context of the relevant art, and will not be interpreted as an idealized or overly formal sense unless explicitly limited herein.

It should be understood that, although the preferred embodiments are shown and described above, the present disclosure is not limited to the above specific embodiments, and various modifications and variations may be made by those skilled in the art without departing from the spirit and scope of the appended claims. Therefore, it should be noted that various modifications and variations cannot be considered to exceed the technical spirit and scope of the present disclosure.

## Claims

1. A carrier, wherein
the carrier comprises a body and a bottom support member, at least a part of the body is detachably connected to the bottom support member by means of at least one first connection assembly, and forms a box body with an accommodating space together with the bottom support member;
the body comprises a first support member and a second support member, and at least a part of the first support member is detachably connected to the second support member by at least one second connection assembly; and
when the at least a part of the body is separated from the bottom support member and the at least a part of the first support member is separated from the second support member, the first support member and/or the second support member are capable of being folded to change the box body from an unfolded state to a stowed state.

2. The carrier according to claim 1, wherein
the at least one first connection assembly comprises a first connecting member and a second connecting member detachably connected to each other, the first connecting member is disposed on the body, and the second connecting member is disposed on the bottom support member; and/or
the at least one second connection assembly comprises a third connecting member and a fourth connecting member detachably connected to each other, the third connecting member is disposed on the first support member, and the fourth connecting member is disposed on the second support member.

3. The carrier according to claim 1, wherein the first support member and the second support member are detachably connected to each other, and
after the first support member and the second support member are completely separated from each other, the first support member and/or the second support member are capable of being folded, respectively, to allow the box body to be in the stowed state.

4. The carrier according to claim 1, wherein
one part of the first support member is non-detachably connected to the second support member and the other part of the first support member is detachably connected to the second support member, and
after the body and the bottom support member are separated from each other and the other part of the first support member is separated from the second support member, the first support member and the second support member are capable of being folded relative to each other to allow the box body to be in the stowed state.

5. The carrier according to claim 1, wherein
the first support member is a side support member and forms two side surfaces of the body; and the second support member is an upper support member and forms a top surface and at least a part of the other two side surfaces of the body.

6. The carrier according to claim 5, wherein the upper support member is formed by a first sheet-like member, a second sheet-like member and a third sheet-like member, and the second sheet-like member is connected between the first sheet-like member and the third sheet-like member; and
after the side support member is separated from the upper support member, the first sheet-like member, second sheet-like member and third sheet-like member are capable of being folded relative to each other.

7. The carrier according to claim 6, wherein an end of each of the first sheet-like member and the third sheet-like member away from the second sheet-like member is fixedly connected to the bottom support member, and
after the side support member is separated from the upper support member, the upper support member is capable of being folded over the bottom support member by a plurality of folding parts on the first sheet-like member and the third sheet-like member.

8. The carrier according to claim 5, wherein
the side support member comprises a first sub-support member and a second sub-support member, the first sub-support member and the second sub-support member are independent of each other, and each of the first sub-support member and the second sub-support member has a bottom edge extending substantially horizontally and a top edge in an arched shape; and
the bottom edges of the first sub-support member and the second sub-support member are detachably connected to corresponding edges of the bottom support member, and the top edges of the first sub-support member and the second sub-support member are detachably connected to two sides of the upper support member in the arched shape.

9. The carrier according to claim 8, wherein the first sub-support member and the second sub-support member are connected to each other by a connecting component, and the first sub-support member, the connecting component, and the second sub-support member are all detachably connected to the bottom support member; and
after the side support member and the upper support member are completely separated from each other, the first sub-support member and the second sub-support member are capable of being folded relative to each other.

10. The carrier according to claim 9, wherein the first sub-support member, the second sub-support member and the connecting component are integrally formed to form the support member, the bottom edges of the first sub-support member and the second sub-support member are integrally connected to bottom edges of the connecting component in a peripheral direction, and the top edges of the first sub-support member and the second sub-support member are formed as arches and integrally connected by top edges of the connecting component, such that the side support member is detachably connected between the upper support member and the bottom support member.

11. The carrier according to claim 5, wherein one part of the side support member is non-detachably connected to the upper support member, and the other part of the side support member is detachably connected to the upper support member; and
after the other part of the side support member is separated from the upper support member, the side support member and the upper support member are capable of being folded relative to each other.

12. The carrier according to claim 11, wherein the upper support member comprises a first sheet-like member, a second sheet-like member and a third sheet-like member, and each of the first sheet-like member and the third sheet-like member has a flexible structure;
after the other part of the side support member is separated from the upper support member, the upper support member is capable of being folded relative to the side support member by the flexible structures of the first sheet-like member and the third sheet-like member and stowed in the side support member.

13. The carrier according to claim 11, wherein
the side support member comprises a first sub-support member and a second sub-support member, each of which has a bottom edge extending substantially horizontally and a top edge in an arched shape; and
the first sub-support member and the second sub-support member are integrally formed with a connecting piece to form the side support member, such that the bottom edges of the first sub-support member and the second sub-support member form a bottom edge of the body together with a bottom edge of the connecting piece, and the bottom edge of the body is detachably connected to the bottom support member.

14. The carrier according to claim 13, wherein
one part of the first sub-support member and one part of the second sub-support member are non-detachably connected to the upper support member, respectively;
the other part of the first sub-support member and the other part of the second sub-support member are detachably connected to the upper support member by the at least one second connection assembly, respectively; and
the connecting piece has a flexible structure such that the first sub-support member and the second sub-support member are capable of approaching each other to be folded after the other part of the first sub-support member and the other part of the second sub-support member are separated from the upper support member.

15. The carrier according to claim 14, wherein the at least one second connection assembly comprises:
a connecting member disposed at a top edge of the first sub-support member or the second sub-support member and extending along a part of the top edge; and
a further connecting member disposed at a side edge of the upper support member and extending along a part of the side edge,
wherein the connecting member and the further connecting member are disposed in correspondence with each other and detachably connected to each other, such that the other part of the first sub-support member and the other part of the second sub-support member are detachably connected to two side edges of the upper support member, respectively.

16. The carrier according to any one of claims 1 to 15, wherein any sides of the body are provided with an impact resistant material.

17. The carrier according to claim 16, wherein the impact resistant material is disposed on at least one side of the body near a vehicle door when the carrier is placed on a vehicle seat.

18. The carrier according to claim 16, wherein the impact resistant material is configured as a filler material filled in a seat fabric wrapped around the body.

19. The carrier according to claim 16, wherein the impact resistant material is configured as a separate component.

20. The carrier according to any one of claims 1 to 15, wherein one or more side surfaces of the body are provided with a window, and each of the windows is provided with a closure member configured to close and/or shield the window.

21. The carrier according to claim 20, wherein a part of the closure member is non-detachably connected to the body.

22. The carrier according to claim 21, wherein
at least one closure member has a first part and a second part connected to each other,
at least a part of the first part is non-detachably connected to the body and covers one part of the window, and
the second part is detachably connected to the body and covers the other part of the window.

23. The carrier according to claim 22, wherein the first part and the second part are made of different materials and/or have different thickness.

24. The carrier according to claim 22, wherein the second part of the closure member is provided with an impact resistant material.

25. The carrier according to claim 24, wherein the impact resistant material is configured as a filler material filled in the second part of the closure member.

26. The carrier according to claim 21, wherein at least one closure member is provided with an impact resistant material.

27. The carrier according to claim 26, wherein the impact resistant material is integrally formed with the closure member.

28. The carrier according to claim 26, wherein the impact resistant material is separately formed and fixedly connected to the closure member.

29. The carrier according to claim 20, wherein the closure member is a flexible fabric and a retaining member is disposed on an upper part of the closure member to maintain the closure member opening.

30. The carrier according to any one of claims 1 to 15, wherein a carrying handle is disposed on a top surface of the body.

31. The carrier according to any one of claims 1 to 15, wherein an extending part extending downwardly is disposed at a bottom edge of the body, and is configured to insert into a corresponding insertion groove disposed in the bottom support member.

32. The carrier according to any one of claims 1 to 15, wherein the carrier further comprises a bracket assembly, the bracket assembly is disposed at the bottom part of the bottom support member, for securing the carrier to a wheeled moving device or to a vehicle seat by a fixing base assembly.

33. The carrier according to claim 32, wherein the bracket assembly is capable of being connected and secured to an engaging part of the fixing base assembly, or to a locking mechanism of a seat plate of the wheeled moving device.

34. The carrier according to claim 32, wherein the bracket assembly comprises an engaging member, the engaging member is configured as an annular structural member, arranged to be spaced apart from the bottom part of the bottom support member, and configured to be engaged with an engagement structure on the wheeled moving device or on the fixing base assembly, so as to secure the carrier.

35. The carrier according to any one of claims 1 to 15, wherein the bottom support member is provided with an engaging member for securing the box body of the carrier to a moving device.

36. The carrier according to claim 35, wherein
the bottom support member is provided with two third grooves extending respectively in a width direction of the bottom support member and the two third grooves are spaced apart by a predetermined distance in a length direction of the bottom support member, and
the bottom support member is provided with four engaging members, the four engaging members are symmetrically disposed in the two third grooves in both the width direction and the length direction.

37. The carrier according to any one of claims 1 to 15, wherein the carrier is provided with at least one strap guiding mechanism, and the strap guiding mechanism is disposed on at least one of a side part, a bottom part and a top part of the carrier and configured to guide a strap body of a fixing strap assembly to pass therethrough, so that the fixing strap assembly is bonded to the carrier at at least one position.

38. The carrier according to claim 37, wherein the at least one strap guiding mechanism is disposed on the bottom support member and/or on a bracket assembly disposed on the bottom part of the bottom support member.

39. The carrier according to claim 38, wherein the at least one strap guiding structure comprises four first strap guiding mechanisms, the four first strap guiding mechanisms are disposed symmetrically in pairs on the bottom part of the bottom support member or disposed symmetrically in pairs on the bracket assembly on the bottom part of the bottom support member; and/or
the bottom support member comprises two second strap guiding mechanisms, and the two second strap guiding mechanisms are disposed between the engaging members of the bottom support member and a bottom surface of the bottom support member, and are disposed at a centerline in a width direction of the body.

40. The carrier according to any one of claims 1 to 15, wherein the bottom support member is provided with at least one connecting part engaged with a fixing strap assembly to secure the carrier to a vehicle seat.

41. A carrier, wherein
the carrier comprises a body and a bottom support member, and the body is covered on the bottom support member and forms a box body having an accommodating space together with the bottom support member; and
an engaging member is disposed inside the bottom support member, and at least a part of the engaging member is exposed from a bottom part of the bottom support member, for securing the box body of the carrier to a moving device.

42. The carrier according to claim 41, wherein the bottom support member comprises a base housing, a fixing bracket and a support plate,
wherein the base housing is connected to the support plate to form an appearance of the bottom support member, the fixing bracket is provided between the base housing and the support plate, and the fixing bracket comprises the engaging member.

43. The carrier according to claim 42, wherein at least a part of the engaging member is exposed outside the bottom support member through an engaging gap on the base housing to form an engaging part.

44. The carrier according to claim 43, the two engaging members are symmetrically disposed and extend along a length direction of the box body, and the four engaging gaps are correspondingly formed on the base housing, so as to form the four engaging parts on the bottom part of the bottom support member.

45. The carrier according to any one of claims 42 to 44, wherein the fixing bracket further comprises fixing bases, the fixing bases are disposed at two ends of the engaging member, respectively, to secure the engaging member between the base housing and the support plate.

46. The carrier according to any one of claims 41 to 44, wherein
the body is detachably connected to the bottom support member, and/or
the body is an integrally formed structure and made of a rigid material to keep a shape of the body.

47. The carrier according to any one of claims 41 to 44, wherein the bottom support member is provided with at least one strap guiding mechanism configured to guide a strap body of a fixing strap assembly to pass therethrough, so that the fixing strap assembly is bonded to the carrier at at least one position.

48. The carrier according to claim 47, wherein the strap guiding mechanism comprises a shell, the shell defines a channel, and the channel has a first port and a second port, through which the strap body passes.

49. The carrier according to claim 48, wherein the channel further has a side introduction port, the side introduction port is located on a same side of the first port and the second port, and the side introduction port has a sloped wall.

50. The carrier according to claim 48, wherein a first convex rib and a second convex rib are respectively provided on side walls opposite to each other in the channel, and the first convex rib and the second convex rib are alternately provided in a length direction of the strap body.

51. The carrier according to claim 48, further comprising a cam disposed in the channel, wherein the cam has a working position and a disabled position, in the working position, the cam abuts the strap body against the shell; and in the disabled position, the cam releases pressing on the strap body.

52. The carrier according to claim 51, wherein a reinforcing member is disposed on a side wall of the channel, and when the cam is in the working position, the strap body is adapted to be clamped between the reinforcing member and the cam.

53. The carrier according to claim 51, wherein the strap guiding mechanism further comprises an adjusting button, the adjusting button is connected to the cam to push the cam to rotate between the working position and the disabled position.

54. The carrier according to claim 53, wherein
the shell defines a mounting cavity adjacent to the channel, and the adjusting button is mounted in the mounting cavity; and
the shell defines an operation port for operating the adjusting button.

55. The carrier according to claim 51, wherein the cam has a plurality of teeth configured to abut against the strap body.

56. A carrier, comprising:
a box body comprising a body and a bottom support member, wherein the body is covered on the bottom support member and forms a box body having an accommodating space together with the bottom support member; and
a bracket assembly configured to secure the carrier to a wheeled moving device, or to a vehicle seat by means of a fixing base assembly, wherein the box body is mounted on the bracket assembly by the bottom support member.
wherein the bracket assembly comprises an engaging member, the engaging member is spaced apart from the bottom part of the bottom support member and configured to be engaged with an engagement structure on the wheeled moving device or on the fixing base assembly, so as to secure the carrier.

57. The carrier according to claim 56, wherein the engaging member is configured as an annular structural member, and a center of the engaging member corresponds to a center of the box body in both a width direction of the box body and a length direction of the box body.

58. The carrier according to claim 57, wherein the bracket assembly further comprises a plurality of first connecting brackets symmetrically disposed on the engaging member to be connected to the bottom part of the box body and spaced apart from each other by a certain distance.

59. The carrier according to claim 57, wherein the bracket assembly further comprises a plurality of second connecting brackets disposed on two opposite sides of the engaging member along a longitudinal axis direction and connected to the bottom part of the box body.

60. The carrier according to claim 57, wherein the bracket assembly further comprises a structural reinforcement member disposed substantially at a middle of the engaging member along the longitudinal axis direction, a central part of the structural reinforcement member has a curved shape toward the bottom part of the box body.
